(19) Europäisches Patentamt
European Patent Office
Office européen des brevets

(11) **EP 4 488 797 A1**

(12) **EUROPEAN PATENT APPLICATION**
published in accordance with Art. 153(4) EPC

(43) Date of publication:
**08.01.2025 Bulletin 2025/02**

(21) Application number: **23795261.9**

(22) Date of filing: **23.04.2023**

(51) International Patent Classification (IPC):
***G06F 1/3234*** (2019.01)

(52) Cooperative Patent Classification (CPC):
**G06F 1/3218; G06F 1/3234;** Y02D 30/70

(86) International application number:
**PCT/CN2023/090007**

(87) International publication number:
**WO 2023/207828 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.04.2022 CN 202210454392**

(71) Applicant: **Huawei Technologies Co., Ltd.
Shenzhen, Guangdong 518129 (CN)**

(72) Inventors:
• **MA, Shuliang
Shenzhen, Guangdong 518129 (CN)**
• **HU, Kai
Shenzhen, Guangdong 518129 (CN)**

(74) Representative: **Maiwald GmbH
Engineering
Elisenhof
Elisenstrasse 3
80335 München (DE)**

(54) **METHOD FOR REDUCING POWER CONSUMPTION, AND ELECTRONIC DEVICE**

(57)    A power consumption reduction method and an electronic device are provided. The method is applied to an electronic device provided with a foldable display. The foldable display includes a first region and a second region. In the method, when the foldable display is in a folded state, the first region is used to display an image, and the second region is not used to display an image, the electronic device enters a power saving mode. In the power saving mode, a light-emitting control signal and/or a gate scanning signal in the second region are/is always in an off state, or a light-emitting control signal and/or a gate scanning signal in the second region are/is in an off state within a first time period, and are/is in an on state within a second time period to display black. According to the foregoing method, screen power consumption of the electronic device can be reduced when the electronic device performs displaying in the folded state, thereby improving battery life performance of the electronic device and improving user experience.

600

```
┌──────────────────────────────────────────────────────┐
│   Determine a physical form of a foldable display      │── S610
└──────────────────────────────────────────────────────┘
                          │
┌──────────────────────────────────────────────────────┐
│   An electronic device enters a power saving mode      │
│   when the foldable display is in a folded state, a    │── S620
│   first region is used to display an image, and a      │
│   second region is not used to display an image, where │
│   within a first time period in the power saving mode, │
│   a light-emitting control signal and/or a gate        │
│   scanning signal in the second region are/is in an    │
│   off state                                            │
└──────────────────────────────────────────────────────┘
```

FIG. 16

**Description**

This application claims priority to Chinese Patent Application No. 202210454392.3, filed with the China National Intellectual Property Administration on April 27, 2022 and entitled "POWER CONSUMPTION REDUCTION METHOD AND ELECTRONIC DEVICE", which is incorporated herein by reference in its entirety.

**TECHNICAL FIELD**

Embodiments of this application relate to the field of electronic device technologies, and more specifically, to a power consumption reduction method and an electronic device.

**BACKGROUND**

A display is an important component of an electronic device (for example, a mobile phone), and is also one of hardware with high power consumption in the entire electronic device. Screen power consumption control helps optimize power consumption of the entire electronic device, and therefore improves battery life performance of the entire electronic device.

After years of device iteration, foldable screen devices have been gradually accepted by users. Under an operation of the user, the foldable screen device has at least two physical forms: a folded state and an unfolded state. To enable the foldable screen device to provide good viewing experience in both the folded state and the unfolded state, a screen of the foldable screen device is generally designed to be larger. Correspondingly, power consumption of the screen is also higher, and battery life experience is severely affected.

Therefore, how to reduce screen power consumption of the foldable screen device is an urgent technical problem that needs to be resolved currently.

**SUMMARY**

Embodiments of this application provide a power consumption reduction method and an electronic device, to reduce screen power consumption of the electronic device when the electronic device performs displaying in a folded state, thereby improving battery life performance of the electronic device and improving user experience.

According to a first aspect, a power consumption reduction method is provided, applied to an electronic device provided with a foldable display, where the foldable display includes a first region and a second region. The method includes: A physical form of the foldable display is determined, where the physical form includes a folded state and an unfolded state; and the electronic device enters a power saving mode when the foldable display is in the folded state, the first region is used to display an image, and the second region is not used to display an image, where within a first time period in the power saving mode, a light-emitting control signal and/or a gate scanning signal in the second region are/is in an off state.

In this embodiment of this application, when the electronic device is in the power saving mode, within the first time period in the power saving mode, the light-emitting control signal and/or the gate scanning signal in the second region are/is in the off state. In this way, a pixel in the second region does not need to work, and a signal for controlling working of a pixel does not need to be applied to the pixel. Therefore, screen power consumption can be reduced, battery life performance of the electronic device can be improved, a service life of the electronic device can be prolonged, and user experience can be improved.

With reference to the first aspect, in a possible implementation, duration of the first time period is duration within which the foldable display is in the folded state, the first region is used to display an image, and the second region is not used to display an image.

After the electronic device enters the power saving mode, provided that the physical form and a display status of the foldable display remain unchanged, the light-emitting control signal and/or the gate scanning signal in the second region may always remain in the off state. In this way, screen power consumption can be minimized.

With reference to the first aspect, in a possible implementation, that the electronic device enters a power saving mode includes: The electronic device enters a first power saving mode within the first time period, where in the first power saving mode, the light-emitting control signal and/or the gate scanning signal in the second region are/is in the off state; and the electronic device enters a second power saving mode within a second time period, where in the second power saving mode, the light-emitting control signal and the gate scanning signal in the second region are in an on state, and the second region displays black, where the first time period and the second time period are adjacent time periods.

After the electronic device enters the power saving mode, when the physical form and the display status of the foldable display remain unchanged, the light-emitting control signal and/or the gate scanning signal in the second region are/is in the off state within the first time period, and the light-emitting control signal and the gate scanning signal in the second region are in the on state. In this way, a problem of display brightness consistency caused when the light-emitting control signal and/or the gate scanning signal in the second region are/is in the off state for a long time can be avoided.

With reference to the first aspect, in a possible implementation, that the electronic device enters a power saving mode includes: The electronic device alternately enters the first power saving mode and the second power saving mode.

When the electronic device alternately enters the first power saving mode and the second power saving mode, the light-emitting control signal and the gate scanning signal in the second region may be turned on at time intervals, so that the light-emitting control signal and/or the gate scanning signal in the second region are/is not in the off state for a long time. Therefore, a problem of inconsistent display brightness caused by inconsistent aging degrees of the first region and the second region can be avoided, so that display brightness consistency of the foldable display can be improved.

With reference to the first aspect, in a possible implementation, a sum of duration of the first time period and duration of the second time period is a preset value.

In this condition, the duration of the first time period and the duration of the second time period may be dynamically adjusted, so that screen power consumption can be reduced, and display brightness consistency between the first region and the second region can be improved.

With reference to the first aspect, in a possible implementation, the duration of the first time period is in a positive correlation with duration and/or average brightness in which the foldable display is used for full-screen displaying; and/or the duration of the second time period is in a negative correlation with duration and/or average brightness in which the foldable display is used for full-screen displaying.

In this way, when the duration and/or average brightness in which the foldable display is used for full-screen displaying are/is long or high, the duration of the first time period may be dynamically set to be longer, and the duration of the second time period may be set to be shorter, so that screen power consumption is reduced as much as possible while display brightness consistency is improved.

With reference to the first aspect, in a possible implementation, the duration of the first time period is in a negative correlation with duration and/or average brightness in which the foldable display is in the folded state, the first region is used to display an image, and the second region is not used to display an image; and/or the duration of the second time period is in a positive correlation with duration and/or average brightness in which the foldable display is in the folded state, the first region is used to display an image, and the second region is not used to display an image.

In this way, when the duration and/or average brightness in which the foldable display is in the folded state, the first region is used to display an image, and the second region is not used to display an image are/is long or high, the duration of the first time period may be dynamically set to be shorter, and the duration of the second time period may be set to be longer, so that display brightness consistency is improved while screen power consumption is reduced.

With reference to the first aspect, in a possible implementation, the duration is accumulated from a first power-on of the electronic device, or is accumulated from a latest power-on of the electronic device.

With reference to the first aspect, in a possible implementation, the preset value is greater than 0 seconds and less than or equal to 10 seconds.

In this way, before the physical form of the electronic device is switched to another physical form state, it can be ensured that the electronic device enters the first power saving mode at least once and enters the second power saving mode at least once in the state. In addition, the electronic device is alternately in the first power saving mode and the second power saving mode as much as possible.

With reference to the first aspect, in a possible implementation, the duration of the first time period is equal to the duration of the second time period.

A time period within which the light-emitting control signal and/or the gate scanning signal in the second region are/is in the off state is equal to a time period within which the light-emitting control signal and/or the gate scanning signal in the second region are/is in the on state. In this way, screen power consumption can be reduced and display brightness consistency can be improved. Further, calculation complexity can be reduced, and computing resources can be saved.

With reference to the first aspect, in a possible implementation, the electronic device includes a folding hinge, and the folding hinge is configured to fold or unfold the foldable display. The determining a physical form of the foldable display includes: detecting an angle of the folding hinge; and determining the physical form of the foldable display based on the angle of the folding hinge.

With reference to the first aspect, in a possible implementation, the electronic device includes a gyroscope and an acceleration sensor. The determining a physical form of the foldable display includes: determining the physical form of the foldable display based on detection data of the gyroscope and detection data of the acceleration sensor.

With reference to the first aspect, in a possible implementation, the determining a physical form of the foldable display includes: determining the physical form of the foldable display based on a display parameter of a to-be-displayed image, where the display parameter of the to-be-displayed image matches a size of a region that is on the foldable display and that is used to display an image.

Because regions used to display images are different, display parameters of to-be-displayed images are different. Therefore, a size of a region used to display the to-be-displayed image may be determined based on the display parameter of the to-be-displayed image, to determine the physical form of the foldable display. This embodiment of this application mainly focuses on the folded state of the foldable display. Therefore, the folded state of the foldable display and the unfolded state of the foldable display only need to be distinguished in this embodiment of this application.

With reference to the first aspect, in a possible implementation, the determining the physical form of the foldable display based on a display parameter of a to-be-displayed image includes: when the display parameter of the to-be-displayed image matches a size of a partial region of the foldable display, determining that the foldable display is in the folded state; and when the display parameter of the to-be-displayed image matches a size of an entire region of the foldable display, determining that the foldable display is in the unfolded state.

Generally, when the foldable display is in the unfolded state, the electronic device displays an image in an entire display region of the foldable display, and does not display the image in a partial region of the foldable display.

With reference to the first aspect, in a possible implementation, before the electronic device enters the power saving mode, the method further includes: determining a display status of the foldable display based on the display parameter of the to-be-displayed image, where when a size of the first region is different from a size of the second region and the display parameter of the to-be-displayed image matches the size of the first region, the display status of the foldable display is that the first region is used to display an image and the second region is not used to display an image.

In this way, both the physical form of the foldable display and the display status of the foldable display can be determined based on the display parameter of the to-be-displayed image, so that a calculation amount can be reduced, and a delay can be reduced.

With reference to the first aspect, in a possible implementation, the display parameter of the to-be-displayed image includes resolution and/or an aspect ratio of the to-be-displayed image.

With reference to the first aspect, in a possible implementation, the determining a physical form of the foldable display includes: determining the physical form of the foldable display based on a display parameter of to-be-displayed content, where the to-be-displayed content includes a non-zero pixel region and a zero pixel region, the non-zero pixel region is used to display an image in a region that is on the foldable display and that is used to display an image, and the zero pixel region is used to display black in a region that is on the foldable display and that is not used to display an image.

Because regions used to display images are different, display parameters of non-zero pixel regions are different. Therefore, a size of a region used to display content corresponding to the non-zero pixel region may be determined based on the display parameter of the non-zero pixel region, to determine the physical form of the foldable display. This embodiment of this application mainly focuses on the folded state of the foldable display. Therefore, the folded state of the foldable display and the unfolded state of the foldable display only need to be distinguished in this embodiment of this application.

With reference to the first aspect, in a possible implementation, the determining the physical form of the foldable display based on a display parameter of to-be-displayed content includes: When a proportion of the zero pixel region in the to-be-displayed content is greater than 0 and less than 1, determining that the foldable display is in the folded state; or when a proportion of the zero pixel region in the to-be-displayed content is equal to 0, determining that the foldable display is in the unfolded state.

If the to-be-displayed content includes the content corresponding to the zero pixel region, it indicates that an image needs to be displayed in a partial region of the foldable display. If the to-be-displayed content does not include the content corresponding to the zero pixel region, it indicates that an image needs to be displayed in an entire region of the foldable display. Generally, when the foldable display is in the unfolded state, the electronic device displays an image in an entire display region of the foldable display, and does not display the image in a partial region of the foldable display. Therefore, the folded state of the foldable display and the unfolded state of the foldable display may be distinguished based on the proportion of the zero pixel region in the to-be-displayed content.

With reference to the first aspect, in a possible implementation, a location of the non-zero pixel region in the to-be-displayed content indicates a location, on the foldable display, of the region that is on the foldable display and that is used to display an image; and a location of the zero pixel region in the to-be-displayed content indicates a location, on the foldable display, of the region that is on the foldable display and that is not used to display an image.

With reference to the first aspect, in a possible implementation, before the electronic device enters the power saving mode, the method further includes: determining a display status of the foldable display based on the display parameter of the to-be-displayed content, where when the location of the non-zero pixel region in the to-be-displayed content corresponds to a location of the first region on the foldable display, and the location of the zero pixel region in the to-be-displayed content corresponds to a location of the second region on the foldable display, the display status of the foldable display is that the first region is used to display an image and the second region is not used to display an image.

In this way, both the physical form of the foldable display and the display status of the foldable display can be determined based on the display parameter of the to-be-displayed content, so that a calculation amount can be reduced, and a delay can be reduced.

With reference to a first aspect, in a possible implementation, a size of the non-zero pixel region matches a size of the region that is on the foldable display and that is used to display an image.

With reference to the first aspect, in a possible implementation, before the electronic device enters the power saving mode, the method further includes: determining the display status of the foldable display based on first information, where the first information includes the physical form of the foldable display and/or a spatial location relationship between the first region and the second region.

With reference to the first aspect, in a possible implementation, when the foldable display is in the folded state, the first region and the second region are away from each other.

In this case, generally, a user can watch only one of the first region and the second region, and therefore, a light-emitting control signal and/or a gate scanning signal in a region that cannot be watched by the user may be turned off.

With reference to the first aspect, in a possible implementation, the foldable display further includes a third region used to connect the first region to the second region, the third region is located at a bending position of the foldable display when the foldable display is in the folded state, and a part or all of the third region is used to assist the first region or the second region in displaying an image, or the third region is used to independently display an image.

With reference to the first aspect, in a possible implementation, when at least a partial region in the third region is not used to display an image, within the first time period in the power saving mode, a light-emitting control signal and/or a gate scanning signal in at least the partial region in the third region are/is in an off state.

When at least the partial region in the third region is not used to display an image, pixels in at least the partial region may be enabled not to work, thereby further reducing screen power consumption.

With reference to the first aspect, in a possible implementation, the foldable display is an organic light-emitting diode OLED screen.

According to a second aspect, an apparatus is provided. The apparatus is included in an electronic device, and the apparatus has a function of implementing behavior in any one of the first aspect or the possible implementations of the first aspect. The function may be implemented by hardware, or may be implemented by hardware executing corresponding software. The hardware or the software includes one or more modules or units corresponding to the foregoing function, for example, a determining module or unit, a display module or unit, a detection module or unit, a processing module or unit, a control module or unit, and a mode switching module or unit.

According to a third aspect, an electronic device is provided, including: a foldable display, where the foldable display includes a first region and a second region; one or more processors; and one or more memories. The one or more memories store one or more computer programs, and the one or more computer programs include instructions. When the instructions are executed by the one or more processors, the electronic device is enabled to perform the method in any one of the first aspect or the possible implementations of the first aspect.

According to a fourth aspect, an electronic device is provided, including one or more processors and one or more memories. The one or more memories are coupled to the one or more processors, the one or more memories are configured to store computer program code, and the computer program code includes computer instructions. When the one or more processors execute the computer instructions, the electronic device is enabled to perform the method in any one of the first aspect or the possible implementations of the first aspect.

For beneficial effects of the apparatus and the electronic device in the second aspect to the fourth aspect, refer to beneficial effects of the method described in the first aspect. Details are not described herein again.

According to a fifth aspect, a computer-readable storage medium is provided, including computer instructions. When the computer instructions are run on an electronic device, the electronic device is enabled to perform the method in any one of the first aspect or the possible implementations of the first aspect.

According to a sixth aspect, a computer program product including instructions is provided. When the computer program product is run on a computer, the computer is enabled to perform the method in any one of the first aspect or the possible implementations of the first aspect.

According to a seventh aspect, a chip is provided. The chip includes a processor and a data interface. The processor reads, through the data interface, instructions stored in a memory, to perform the method in any one of the first aspect or the possible implementations of the first aspect.

Optionally, in an implementation, the chip may further include a memory, and the memory stores instructions. The processor is configured to execute the instructions stored in the memory. When the instructions are executed, the processor is configured to perform the method in any one of the first aspect or the possible implementations of the first aspect.

The chip may be specifically a field programmable gate array or an application-specific integrated circuit.

## BRIEF DESCRIPTION OF DRAWINGS

FIG. 1 is a diagram of a hardware structure of an electronic device according to an embodiment of this application;
FIG. 2 is a diagram of a software structure of an electronic device according to an embodiment of this application;
FIG. 3 is a diagram of an application scenario to which this application is applied;
FIG. 4 is a diagram of display region division of a foldable display according to an embodiment of this application;

FIG. 5(a) to FIG. 5(c) are a diagram in which an electronic device in FIG. 4 is in different physical forms;

FIG. 6 is another diagram of display region division of a foldable display according to an embodiment of this application;

FIG. 7 is a schematic flowchart of a power consumption reduction method according to an embodiment of this application;

FIG. 8 is a diagram of determining a physical form of an electronic device according to an embodiment of this application;

FIG. 9 is another diagram of determining a physical form of an electronic device according to an embodiment of this application;

FIG. 10 and FIG. 11(a) and FIG. 11(b) are diagrams of an interface of an electronic device to which the method in FIG. 7 is applied according to an embodiment of this application;

FIG. 12 is a schematic flowchart of a power consumption reduction method according to an embodiment of this application;

FIG. 13 is a diagram of an interface of an electronic device to which the method in FIG. 12 is applied according to an embodiment of this application;

FIG. 14 and FIG. 15 are still other diagrams of display region division of a foldable display according to an embodiment of this application;

FIG. 16 is a schematic flowchart of a power consumption reduction method according to an embodiment of this application;

FIG. 17 is a block diagram of a structure of an apparatus according to an embodiment of this application; and

FIG. 18 is a block diagram of a structure of an apparatus according to an embodiment of this application.

## DESCRIPTION OF EMBODIMENTS

The following describes technical solutions of embodiments in this application with reference to accompanying drawings.

It should be noted that, in descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "a plurality of" means two or more, and "at least one" and "one or more" mean one, two, or more. The singular expression forms "one", "a", "the", "the foregoing", "this", and "the one" are also intended to include an expression form like "one or more", unless the opposite is explicitly indicated in the context thereof.

The following terms "first" and "second" are merely intended for description, and shall not be understood as an indication or implication of relative importance or implicit indication of a quantity of indicated technical features. Therefore, a feature limited by "first" or "second" may explicitly or implicitly include one or more features.

Reference to "an embodiment", "some embodiments", or the like described in this specification indicates that one or more embodiments of this application include a specific feature, structure, or characteristic described with reference to embodiments. Therefore, statements such as "in one embodiment", "in some embodiments", "in some other embodiments", and "in still some other embodiments" that appear in this specification and differ from each other do not necessarily refer to a same embodiment; instead, it means "one or more, but not all, embodiments", unless otherwise specifically emphasized in another manner. The terms "include", "comprise", "have", and their variants all mean "include but are not limited to", unless otherwise specifically emphasized in another manner.

The method provided in embodiments of this application is applied to a foldable screen device. The foldable screen device includes but is not limited to a mobile phone, a tablet computer, a vehicle-mounted device, a wearable device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or another electronic device having a foldable display. A specific type of the electronic device is not limited in embodiments of this application. The foldable screen device may support one-time folding. For example, the foldable screen device is a double-foldable (for example, left-right foldable or up-down foldable) device. Alternatively, the foldable screen device may support a plurality of times of folding. For example, the foldable screen device is a triple-foldable (for example, N-shaped foldable) device or a quad-foldable (for example, M-shaped foldable) device.

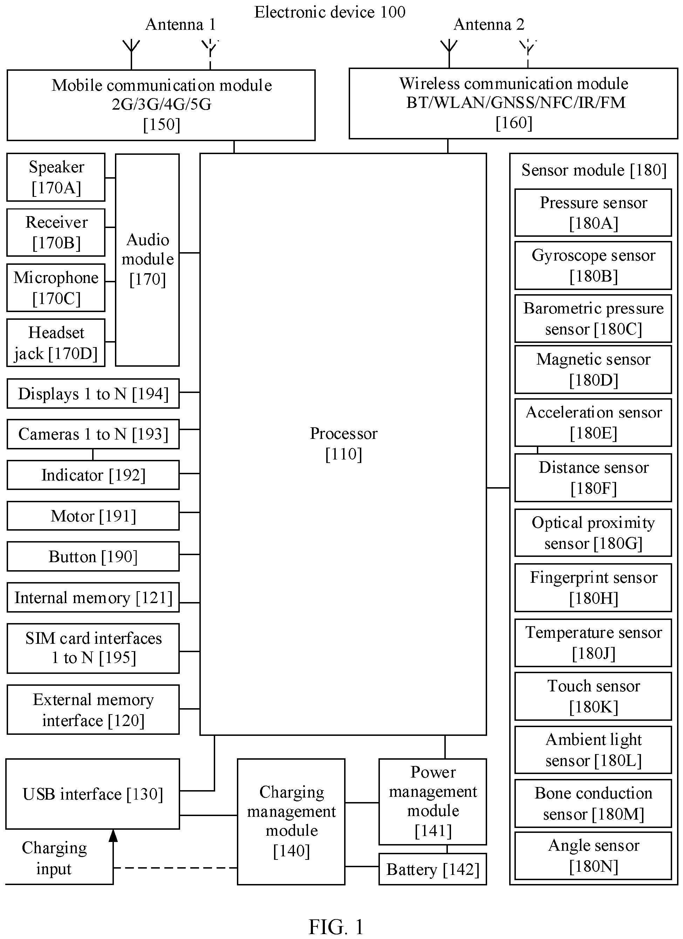

For example, FIG. 1 is a diagram of a hardware structure of an electronic device according to an embodiment of this application.

As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

For example, the processor 110 may communicate with the touch sensor 180K through the I2C bus interface, to implement a touch function of the electronic device 100. The processor 110 and the camera 193 may communicate with each other through a camera serial interface (camera serial interface, CSI) in the MIPI, to implement a photographing function of the electronic device 100. The processor 110 and the display 194 may communicate with each other through a display serial interface (display serial interface, DSI) in the MIPI, to implement a display function of the electronic device 100.

It may be understood that an interface connection relationship between modules described in the foregoing examples is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The power management module 141 is configured to be connected to the battery 142. The charging management module 140 may further supply power to the electronic device 100 through the power management module 141 while charging the battery 142. The power management module 141 may be further configured to monitor parameters such as a battery capacity, a battery cycle count, and a battery health status. In this application, when the battery 142 supplies power to the electronic device 100, the electronic device 100 is in a power-on state; or when the battery 142 does not supply power to the electronic device 100, the electronic device 100 is in a power-off state. In a process in which the battery 142 supplies power to the electronic device 100, the processor 110 may further control the battery 142 to supply power to a component in the electronic device 100. When power is supplied to a component (for example, the display 194), the component is in a power-on state; or when power is not supplied to a component, the component is in a power-off state.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 includes one or more GPUs that execute program instructions to generate or change display information.

The display 194 is configured to display an image, a video, and the like. The display 194 includes a display panel. In this embodiment of this application, the display panel may be an organic light-emitting diode (organic light-emitting diode, OLED), an active-matrix organic light-emitting diode (active-matrix organic light-emitting diode, AMOLED), a flexible light-emitting diode (flex light-emitting diode, FLED), a micro-OLED, a quantum dot light-emitting diode (quantum dot light-emitting diode, QLED), or the like. In some embodiments, the electronic device 100 may include one or N displays 194, where N is a positive integer greater than 1.

In this embodiment of this application, because the display panel uses the foregoing material, the display 194 may be bent. Herein, that the display 194 may be bent means that the display may be bent to any angle at any part along any axis, and may be maintained at the angle. For example, the display 194 may be folded leftward and rightward from the middle, or may be folded upward and downward from the middle, or may be folded for a plurality of times along a parallel axis.

In this application, a display that can be bent is referred to as a foldable display or a flexible screen. For an electronic device configured with a foldable display, the electronic device may be switched between a small screen in a folded state and a large screen in an unfolded state at any time. The power consumption reduction method provided in this application is applied to an electronic device with a foldable display. When the electronic device is in the folded state, a part or all of a region of the foldable display is exposed to an external environment. For example, when a display region of the display 194 is divided into two parts, and a user folds the display 194 along a folding axis to make the two parts away from each other, one part of the display region may be referred to as a primary screen, and the other part of the display region may be referred to as a secondary screen.

The display 194 includes a pixel array in which pixels are disposed in a matrix form. The pixel array may include N columns×M rows of pixels, that is, include N pixel columns and M pixel rows. Therefore, resolution of the pixel array may be represented as N×M. The pixel column includes pixels disposed in a vertical direction, and the pixel row includes pixels disposed in a horizontal direction. Each pixel includes subpixels with different colors. The subpixels include a red (red, R) subpixel, a green (green, G) subpixel, and a blue (blue, B) subpixel. Optionally, the subpixels may further include a white (white, W) subpixel. The subpixel may have different levels of brightness. For example, an R subpixel, a G subpixel, and a B subpixel may each have 256 levels of brightness, which are respectively represented by integers 0, 1, 2, ..., and 255, where 255 represents a highest level of brightness and 0 represents a lowest level of brightness. A color in which a pixel is displayed may be represented by an RGB value. For example, when the RGB value is (0, 0, 0), the pixel is displayed in black; and when the RGB value is (255, 255, 255), the pixel is displayed in white.

The pixel array may be driven by a driver integrated circuit (integrated circuit, IC). The driver IC may control a pixel display color by using a source (source) data signal (which may be referred to as a source signal or a data signal for short), a gate (gate) scanning signal (which may be referred to as a gate signal or a scanning signal for short), and a light-emitting (emit) control signal (which may be referred to as an EM signal for short). The scanning signal and the data signal are used to control transmission of an image to the screen, and the EM signal is used to control whether a pixel emits light. The display 194 can display an image only when the scanning signal, the data signal, and the EM signal are all in an on state.

The electronic device 100 may implement a photographing function through the ISP, the camera 193, the video codec, the GPU, the display 194, the application processor, and the like. The ISP is configured to process data fed back by the camera 193. The camera 193 is configured to capture a static image or a video. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The external memory interface 120 may be used to be connected to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store one or more computer programs. The one or more computer programs include instructions. The processor 110 may run the instructions stored in the internal memory 121, to enable the electronic device 100 to perform the power consumption reduction method provided in this application, various functional applications, data processing, and the like. The internal memory 121 may include a program storage region and a data storage region. The program storage region may store an operating system. The program storage region may further store one or more applications (for example, Gallery or Contacts) and the like. The data storage region may store data (for example, an image or a contact) or the like created in a process of using the electronic device 100. In addition, the internal memory 121 may include a high-speed random access memory, and may further include a nonvolatile memory, for example, one or more magnetic disk storage devices, a flash memory device, or a universal flash storage (universal flash storage, UFS). In some embodiments, the processor 110 may run the instructions stored in the internal memory 121 and/or instructions stored in the memory disposed in the processor 110, to enable the electronic device 100 to perform the power consumption method provided in embodiments of this application.

The electronic device 100 may implement an audio function by using the audio module 170, the speaker 170A, the receiver 170B, the microphone 170C, the headset jack 170D, the application processor, and the like. For example, audio playing or recording is implemented.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, an angle sensor 180N, and the like.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

For example, in some embodiments of this application, the pressure sensor 180A may be disposed on the display 194. In addition, a touch location of the user and a contact area between a finger and the display 194 in a touch process may be determined based on a detected detection signal indicating that a hand of the user touches the display 194, and a holding posture or a hand shape of the user is determined based on the touch location of the user and the finger contact area. In this way, a region that is of the display in the folded state and that faces the user is determined, and the display region facing the user is turned on. In this embodiment of this application, detection data of the pressure sensor 180A may be used to determine a display status of the display 194, that is, determine specific regions that are of the display 194 and that need to be turned on to display an image, and determine specific regions that need to be turned off to reduce power consumption.

The gyroscope sensor 180B may be configured to determine a motion posture of the electronic device 100. In some embodiments, an angular velocity of the electronic device 100 around three axes (namely, an x-axis, a y-axis, and a z-axis) may be determined by using the gyroscope sensor 180B. The gyroscope sensor 180B may be configured to implement image stabilization during photographing. For example, when a shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may be further used in a navigation scenario and a motion-sensing game scenario.

It should be understood that when the electronic device 100 is still, the gyroscope sensor 180B may detect a magnitude and a direction of gravity. The gyroscope sensor 180B may be further configured to identify a posture of the electronic device 100, and is used in an application like switching between landscape mode and portrait mode or a pedometer.

The gyroscope sensor 180B may further measure an acceleration caused by gravity in a motion process of the electronic device 100. A tilt angle of the electronic device 100 relative to a horizontal plane may be calculated by measuring a gravity acceleration by using the gyroscope sensor 180B. For different tilt angles, gravity accelerations of the electronic device 100 are different. Therefore, the electronic device 100 may dynamically obtain an acceleration value of the gyroscope sensor, and analyze an acceleration change, to determine a change process of the tilt angle of the electronic device 100, and further determine a moving manner of the electronic device 100.

For example, in some embodiments of this application, the electronic device 100 in the folded state may be flipped. Therefore, location relationships between different display regions of the display and the user may change. The gyroscope sensor may be configured to monitor a flipping process of the electronic device 100. When the electronic device 100 flips from a horizontal state, the gyroscope sensor may monitor angular velocities of the electronic device 100 around three axes (namely, the x-axis, the y-axis, and the z-axis), to determine the flipping process of the electronic device 100, determine location relationships between different display regions of the display of the flipped electronic device 100 and the user, and turn on a display region facing the user.

The barometric pressure sensor 180C is configured to measure barometric pressure. In some embodiments, the electronic device 100 calculates an altitude based on a value of the barometric pressure measured by the barometric pressure sensor 180C, to assist in locating and navigation.

The magnetic sensor 180D includes a Hall sensor. The electronic device 100 may detect opening and closing of a flip leather case by using the magnetic sensor 180D. In some embodiments, when the electronic device 100 is a flip phone, the electronic device 100 may detect opening and closing of a flip cover based on the magnetic sensor 180D. Further, a feature like automatic unlocking of the flip cover is set based on a detected opening or closing state of the leather case or a detected opening or closing state of the flip cover.

The acceleration sensor 180E may detect magnitudes of accelerations in various directions (generally on three axes) of the electronic device 100.

For example, in some embodiments of this application, the electronic device 100 in the folded state may be moved or flipped. Therefore, location relationships between different display regions of the display and the user may change. The acceleration sensor 180E may be configured to monitor an acceleration change status of the electronic device 100 around three axes (namely, the x-axis, the y-axis, and the z-axis). In addition, a moving manner or a flipping process of the electronic device 100 may be determined in combination with monitoring performed by the acceleration sensor 180E and the gyroscope sensor 180B. For example, the acceleration sensor 180E obtains the acceleration change status, and the gyroscope sensor 180B determines the change process of the tilt angle of the electronic device 100. Therefore, location relationships between different display regions of the display of the flipped electronic device 100 and the user are determined, to turn on a display region facing the user.

Therefore, when the electronic device 100 is a foldable screen device, detection data of the acceleration sensor 180E and the gyroscope sensor 180B may be used to determine a physical form of the electronic device 100, for example, a folded state or an unfolded state.

The distance sensor 180F is configured to measure a distance. The electronic device 100 may measure the distance in an infrared manner or a laser manner. In some embodiments, in a photographing scenario, the electronic device 100 may measure a distance by using the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G can also be used in a leather case mode or a pocket mode to automatically unlock or lock the screen.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being abnormally shut down due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch component". The touch sensor 180K may be disposed on the display 194, and the touch sensor 180K and the display 194 form a touch display. The touch sensor 180K is configured to detect a touch operation performed on or near the touch sensor 180K. The touch sensor may transfer the detected touch operation to the application processor to determine a type of the touch event. A visual output related to the touch operation may be provided through the display 194. In some other embodiments, the touch sensor 180K may alternatively be disposed on a surface of the electronic device 100, and is at a location different from that of the display 194.

It should be understood that, in descriptions of this embodiment of this application, the display 194 and the touch sensor 180K are used as a whole and are referred to as a "touch display ". In other words, the touch display in this application may be folded along any axis, and may further receive a touch operation of the user, for example, an operation like tap, double-tap, or slide, and transfer operation information to the processor 110. The processor 110 determines an operation type and an operation result, and executes the corresponding operation result.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, to receive a blood pressure beating signal. In some embodiments, the bone conduction sensor 180M may alternatively be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The angle sensor 180N may obtain a folding angle of the electronic device 100. The angle sensor 180N may be disposed on a bent part of the foldable display of the electronic device 100. The electronic device 100 measures, by using the angle sensor 180N, an included angle formed by two ends of a middle bent part in a folding process of the foldable display. The physical form of the electronic device 100, for example, the folded state or the unfolded state, may be determined based on an included angle formed by two ends of a bent part of the electronic device 100.

The button 190 includes a power button, a volume button, and the like. The button 190 may be a mechanical button, or may be a touch button. The electronic device 100 may receive a button input, and generate a key signal input related to a user setting and function control of the electronic device 100.

The motor 191 may generate a vibration prompt. The motor 191 may be configured to provide an incoming call vibration prompt and a touch vibration feedback.

The indicator 192 may be an indicator light, and may be configured to indicate a charging status and a power change, or may be configured to indicate a message, a missed call, a notification, and the like.

The SIM card interface 195 is configured to be connected to a SIM card.

It may be understood that the structure illustrated in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The foregoing describes a possible diagram of a hardware structure of the electronic device 100. A software system of the electronic device 100 may use a layered architecture, an event-driven architecture, a microkernel architecture, a microservice architecture, or a cloud architecture. In this embodiment of this application, an Android® system with the layered architecture is used as an example to illustrate a software structure of the electronic device 100.

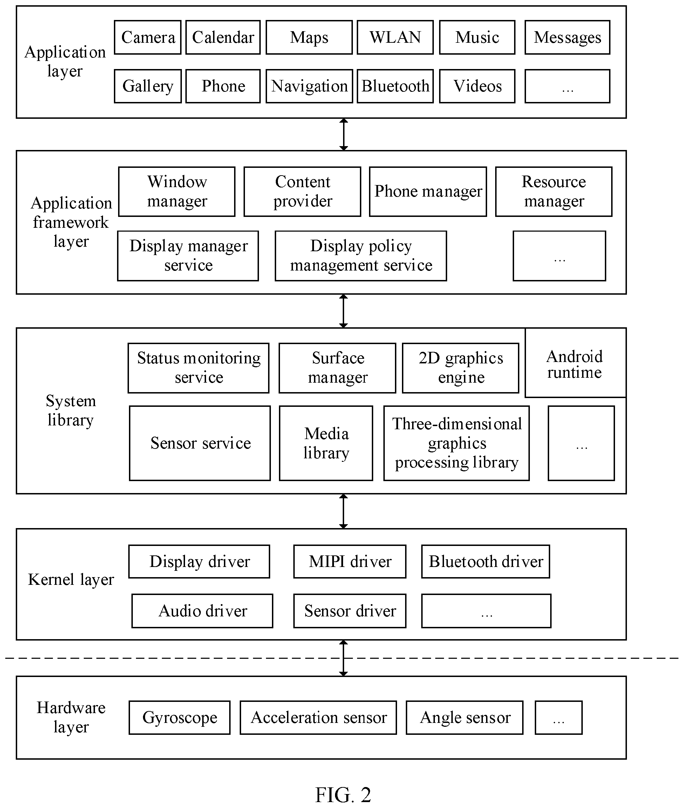

FIG. 2 is a block diagram of a software structure of the electronic device 100 according to an embodiment of this application. In a layered architecture, software is divided into several layers, and each layer has a clear role and task. The layers communicate with each other through a software interface. In some embodiments, an Android® system is divided into four layers: an application layer, an application framework layer, a system runtime library layer (including a system library and an Android runtime (Android runtime)), and a kernel layer from top to bottom. Below the kernel layer is a hardware layer.

The application layer may include a series of application packages. As shown in FIG. 2, the application packages may include applications such as Camera, Gallery, Calendar, Phone, Maps, Navigation, WLAN, Bluetooth, Music, Videos, and Messages. An application is mainly based on a user interface (user interface, UI), and is usually compiled by invoking an interface of the application framework layer by using a Java language.

The application framework layer provides an application programming interface (application programming interface, API) and a programming framework for an application in the application layer. The application framework layer includes some predefined functions. As shown in FIG. 2, the application framework layer may include a window manager, a content provider, a phone manager, a resource manager, a display manager service (display manager service, DMS), a display policy management service, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and a browsing bookmark, an address book, and the like.

The phone manager is configured to provide a communication function for the electronic device 100, for example, management of a call status (including answering, declining, or the like).

The resource manager provides various resources such as a localized character string, an icon, a picture, a layout file, and a video file for an application.

The display policy management service may be configured to obtain a specific physical form of a current foldable display from an underlying display system. Further, the display policy management service may determine a display parameter based on the specific physical form of the foldable display. For example, the display parameter may include a pixel width (or resolution) of a to-be-displayed image on a primary screen, a pixel width (or resolution) of a to-be-displayed image on a secondary screen, a pixel width (or resolution) of a to-be-displayed image on a full screen, or the like. The display policy management service may notify the display manager service (DMS) of the display parameter. The DMS may be displayed on the foldable display by using surfaceflinger and a display driver.

The system runtime library layer (libraries) may be divided into two parts: the system library and the Android runtime.

The Android runtime (Android runtime) is an Android running environment and includes a kernel library and a virtual machine. The Android runtime is responsible for scheduling and management of the Android system. The kernel library includes two parts: a functional function that needs to be invoked in Java language and a kernel library of Android.

The application layer and the application framework layer run on the virtual machine. The virtual machine executes java files at the application layer and the application framework layer as binary files. The virtual machine is configured to implement functions such as object lifecycle management, stack management, thread management, security and abnormality management, and garbage collection.

The system library is a support of an application framework, and may include a plurality of functional modules, for example, a status monitoring service, a surface manager (surface manager), a sensor service, a media library (media library), a 2D graphics engine, and a three-dimensional graphics processing library.

The status monitoring service is used to identify a physical form change of the foldable display. For example, when the foldable display is folded, the foldable display is divided into a primary screen and a secondary screen. The status monitoring service may invoke a sensor service (sensor service) to start sensors such as a gyroscope sensor and an acceleration sensor for detection. The status monitoring service may calculate a current included angle between the primary screen and the secondary screen based on detection data reported by each sensor. In this way, based on the included angle between the primary screen and the secondary screen, the status monitoring service may determine that the foldable display is in a physical form like an unfolded state or a folded state. In addition, the status monitoring service may report the determined physical form to the display policy management service. The status monitoring service may be independently disposed in the underlying display system, or may be disposed in the system library and/or the kernel layer.

For ease of understanding, an example in which a game interface is displayed on the display is used. A data flow direction inside an Android operating system may be as follows: The gyroscope and the acceleration sensor at the hardware layer may report the detected data to the sensor driver, and the sensor driver reports, by using the sensor service, the data detected by the gyroscope and the acceleration sensor to the status monitoring service. The status monitoring service may determine an included angle between the primary screen and the secondary screen based on the data detected by the gyroscope and the acceleration sensor, and further determine the physical form of the foldable display. Further, the status monitoring service may report the determined physical form of the foldable display to the display policy management service, and the display policy management service determines a current display parameter on the foldable display. The display policy management service may notify the display manager service (DMS) of the determined display parameter. For example, the foldable display of the electronic device is in a full-screen display mode. The DMS may power on the entire foldable display by using surfaceflinger and the display driver, and display the game display interface based on a corresponding display parameter in the full-screen display mode. In addition, the DMS may notify a window manager service (window manager service, WMS) (namely, the window manager) to create a corresponding window on the foldable display for displaying.

In this embodiment of this application, the system runtime library layer, the kernel layer, and the like below the application framework layer may be referred to as an underlying system. The underlying system includes an underlying display system that is configured to provide a display service. For example, the underlying display system includes the display driver at the kernel layer and the surface manager (surface manager) in the system library.

The sensor service is configured to monitor sensor data uploaded by various sensors at the hardware layer, to determine the physical form of the electronic device 100.

The surface manager is configured to manage a display subsystem, and provides fusion of 2D and 3D layers for a plurality of applications.

The media library supports playback and recording in a plurality of commonly used audio and video formats, and static image files. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software, and is used to provide essential functions of an operating system, such as file management, memory management, process management, and a network protocol stack. The kernel layer includes at least a display driver, a MIPI driver, an audio driver, a sensor driver, a Bluetooth driver, and the like.

The hardware layer may include various types of sensors, such as an acceleration sensor, a gyroscope sensor, and an angle sensor.

For ease of understanding, in the following embodiments of this application, an electronic device having the structures shown in FIG. 1 and FIG. 2 is used as an example to describe, with reference to the accompanying drawings and application scenarios, in detail the power consumption reduction method provided in embodiments of this application.

As described in the background, a display is an important component of an electronic device, and is also one of hardware with high power consumption in the entire electronic device. For a foldable screen device, to provide good viewing experience in both a folded state and an unfolded state, a screen of the foldable screen device is generally designed to be larger. Correspondingly, power consumption of the screen is also higher, and a battery life and a service life of the foldable screen device are affected. Therefore, an embodiment of this application provides a power consumption reduction method, to reduce screen power consumption of the foldable screen device, thereby helping optimize power consumption of the entire electronic device, improve battery life performance of the entire electronic device, and improve user experience.

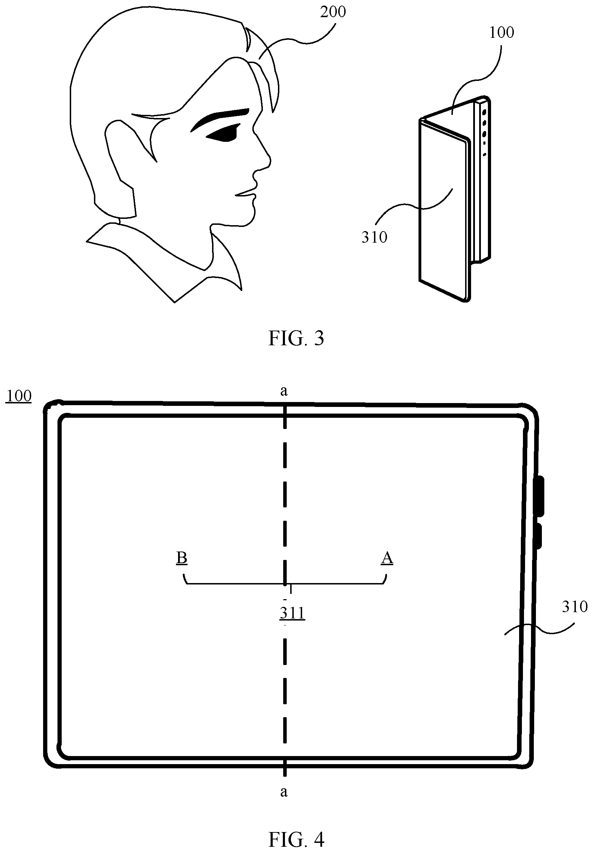

FIG. 3 is a diagram of an application scenario to which this application is applied. As shown in FIG. 3, the scenario includes an electronic device 100 and a user 200 who uses the electronic device 100.

The electronic device 100 is a foldable screen device. Specifically, the electronic device 100 includes a foldable display 310.

The electronic device 100 is equipped with an operating system, and a system-level application (application, APP) is built in the operating system. A user may also install or uninstall a user-level app based on a requirement of the user. The electronic device 100 may have the hardware structure shown in FIG. 1 and/or the software architecture shown in FIG. 2.

The user 200 may interact with the electronic device 100 by using a gesture, a voice, or the like, for example, turning on a display of the electronic device 100, or starting an application on the electronic device 100. Some operations performed by the user 200 on the electronic device 100 may change a physical form of the electronic device 100, thereby switching a display status of the foldable display 310. For example, when the user 200 unfolds the electronic device 100, an entire region of the foldable display 310 may be used to display an image; and when the user 200 folds the electronic device 100, a partial region (for example, a region facing the user 200) of the foldable display 310 is used to display an image. In other words, in response to an operation of the user 200, a region that is on the electronic device 100 and that is used to display an image may be switched between different regions of the foldable display 310.

In this embodiment of this application, a physical form of the electronic device includes at least the following two types: a folded state and an unfolded state. The unfolded state is a form in which an entire display region of the foldable display is located on a same plane. The folded state is a form in which a partial region of the foldable display is bent and stacked with other parts.

More broadly, the folded state may be understood as a physical form other than the folded state.

FIG. 4 is a diagram of display region division of a foldable display according to an embodiment of this application.

Refer to FIG. 4. An example in which the electronic device 100 is an outward foldable screen device is used. An entire display region 311 of the foldable display 310 may be divided into two regions: a region A and a region B. A display area of the region A and a display area of the region B may be the same, or may be different. The user may unfold or fold the foldable display 310 along a folding axis aa. Correspondingly, the electronic device 100 may be in an unfolded state or a folded state. After the user folds the foldable display 310 along the folding axis aa, the region A and the region B are away from each other, and a screen is exposed outside. After the user unfolds the foldable display 310 along the folding axis aa, the region A and the region B are located on a same plane, to form the entire display region 311. A location of the folding axis aa may be preset, or may be randomly selected on the foldable display 310 by the user.

In some embodiments, the region A and the region B may be respectively referred to as a primary screen and a secondary screen. The primary screen and the secondary screen may be fixed. For example, the region A is fixedly used as the primary screen, and the region B is fixedly used as the secondary screen; or the region B is fixedly used as the primary screen, and the region A is fixedly used as the secondary screen. Definitions of the primary screen and the secondary screen may be determined based on the physical form of the electronic device, sizes of the region A and the region B, whether the region A and the region B are turned on by the user, or another condition. For example, when the electronic device is in the folded state, a region with a larger display area is defined as the primary screen, and a region with a smaller display area is defined as the secondary screen; or when the electronic device is in the folded state, a display region facing the user is defined as the primary screen, and a display region away from the user is defined as the secondary screen; or when the electronic device is in the folded state, a region in which an image is displayed is defined as the primary screen, and a region in which no image is displayed is defined as the secondary screen. This is not limited in embodiments of this application.

In actual application, when the electronic device is in the unfolded state, the primary screen and the secondary screen are displayed as a whole. When the electronic device is in the folded state, the electronic device always uses the primary screen for displaying, and the secondary screen is always not used for displaying; or the user may choose to use the primary screen and/or the secondary screen for displaying. This is not limited in embodiments of this application.

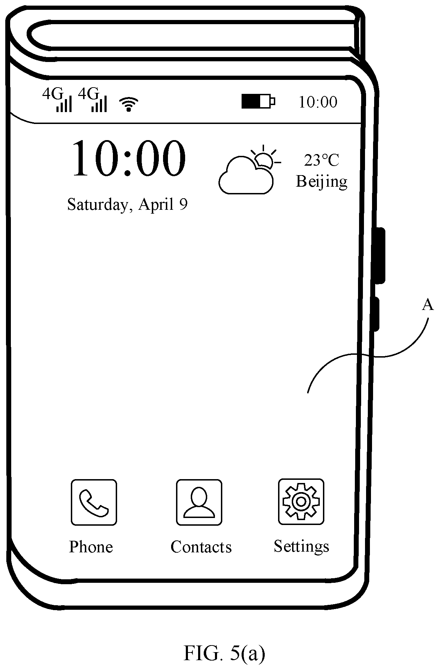

For example, FIG. 5(a) to FIG. 5(c) are a diagram in which the foldable screen device 100 in FIG. 4 is in different physical forms.

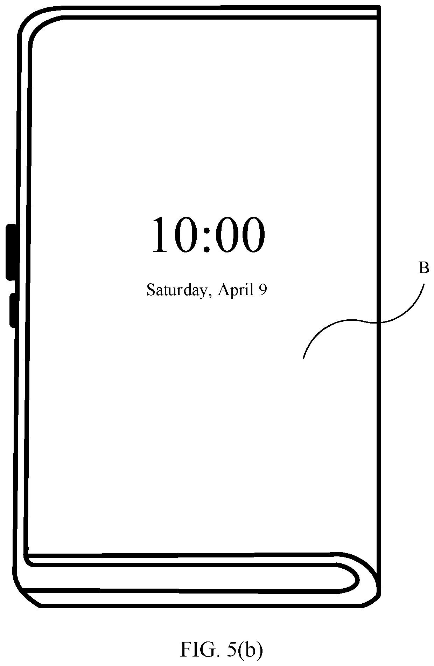

As shown in FIG. 5(a) and FIG. 5(b), the electronic device is in the folded state. FIG. 5(a) is a diagram of displaying an image in the region A when the electronic device is in the folded state, and FIG. 5(b) is a diagram of displaying an image in the region B when the electronic device is in the folded state.

In some embodiments, when the electronic device is in the folded state, the region A and the region B may be used to independently display an image. For example, when the electronic device is in the folded state, the region A and the region B simultaneously and independently display a picture. For example, in FIG. 5(a), when an image is displayed in the region A, an image is also displayed in the region B. In FIG. 5(b), when an image is displayed in the region B, an image is also displayed in the region A. Alternatively, when the electronic device is in the folded state, an image is displayed in a region facing the user, and no image is displayed in a region away from the user. For example, in FIG. 5(a), the region A faces the user, and the region B is away from the user. Therefore, an image is displayed in the region A, and no image is displayed in the region B. In FIG. 5(b), the region B faces the user, and the region A is away from the user. Therefore, an image is displayed in the region B, and no image is displayed in the region A.

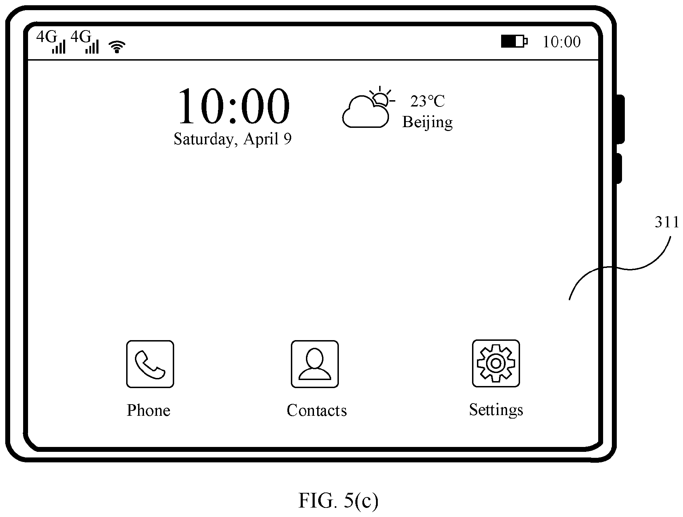

As shown in FIG. 5(c), the electronic device is in the unfolded state. In this case, the region A and the region B may be used as the entire display region 311 for displaying.

In the example in FIG. 5(a) to FIG. 5(c), the region A and the region B may be used as two independent display regions for image displaying. In some other embodiments, when the electronic device is in the folded state, only one of the region A and the region B is fixedly used as an independent display region for displaying. For example, the electronic device may preset the region A as a display region when the electronic device is in the folded state, and the region B is only used to join the region A to form an entire display region for displaying when the electronic device 100 is in the unfolded state. In other words, the region B cannot independently display an image.

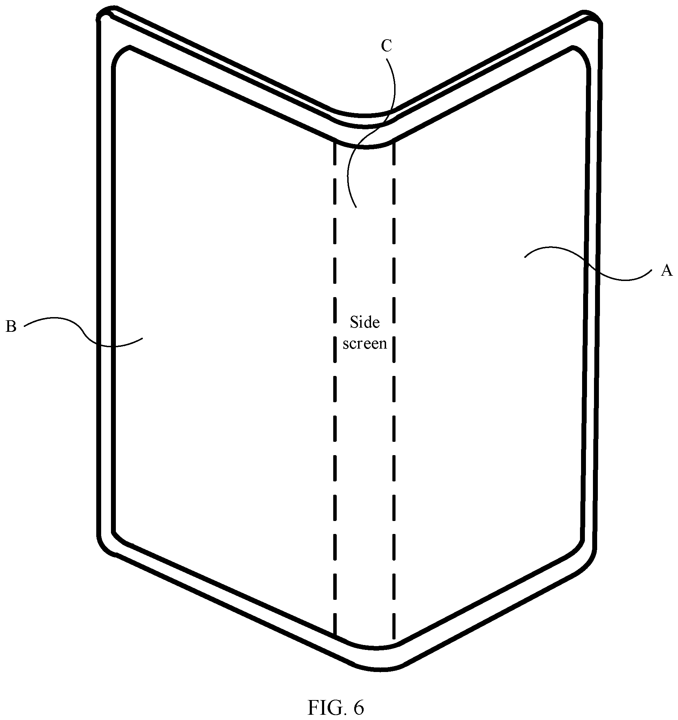

FIG. 6 is another diagram of display region division of a foldable display according to an embodiment of this application.

As shown in FIG. 6, an example in which the electronic device is an outward foldable screen device is still used. The entire display region 311 of the foldable display 310 may be divided into three regions: a region A, a region B, and a region C. The region C is located between the region A and the region B, and is used to connect the region A to the region B. The user may fold the region A and the region B by using a central axis of the region C as a folding axis. Therefore, when the electronic device is in the folded state, the region A and the region B are away from each other, a screen is exposed outside, and the region C is located at a bending position of the foldable display 310. When the electronic device is in the unfolded state, the region A, the region B, and the region C are located on a same plane, to form the entire display region 311.

In some embodiments, the region C may be referred to as a side screen. When the electronic device is in the folded state, a part or all of the side screen may be used to assist the region A or the region B in displaying an image, or the side screen is used to independently display an image.

For example, the side screen may be used as an independent display region to display an image. For example, when the electronic device is in the folded state, the side screen is used to display time, a date, weather, an application icon, a notification message, a volume control, another small widget, or the like. The side screen may be in a turned-on state or a turned-off state. For example, the user may tap the side screen to turn on or turn off the side screen. Alternatively, when the electronic device does not receive a notification message, the side screen is turned off, and when the electronic device receives a notification message, the side screen may be turned on to remind the user. Alternatively, the side screen may be used to display an always on display (always on display, AOD) interface, and a part of the side screen is turned on.

For another example, the side screen may assist the region A or the region B in displaying an image. For example, when the electronic device is in the folded state, the side screen, as a part of the region A, collaborates with the region A to display an image that needs to be displayed in the region A. Alternatively, when the electronic device is in the folded state, the side screen, as a part of the region B, collaborates with the region B to display an image that needs to be displayed in the region B. Alternatively, when the electronic device is in the folded state, a part of the side screen belongs to the region A and collaborates with the region A to display an image that needs to be displayed in the region A, and the other part of the side screen belongs to the region B and collaborates with the region B to display an image that needs to be displayed in the region B. In this case, turn-on or turn-off of the side screen may collaborate with corresponding display manners of the region A and the region B. For example, if the region A is turned on, the part that is of the side screen and that is used to collaborate with the region A is turned on; or if the region B is turned on, the part that is of the side screen and that is used to collaborate with the region B is turned on.

In some embodiments, display content of the side screen may vary with an application scenario. For example, when the electronic device is in the folded state and the region A or the region B is used to display a home screen, the side screen may be used as an independent display region to display an image. When the electronic device is in the folded state and the region A or the region B is used to display a specific application interface, the side screen may assist the region A or the region B in displaying an image.

When the electronic device is in the unfolded state, the side screen, the region A, and the region B may be used as a whole to display an image. A specific display status of the side screen may be determined based on an actual situation. This is not limited in embodiments of this application.

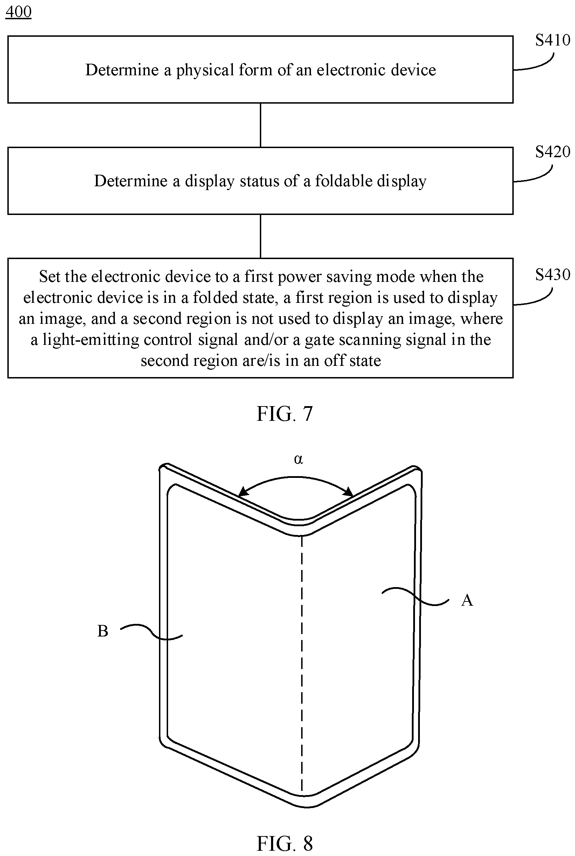

FIG. 7 is a schematic flowchart of a power consumption reduction method according to an embodiment of this application. A method 400 shown in FIG. 7 may be applied to a foldable screen device, for example, applied to the outward foldable screen device shown in FIG. 4 and FIG. 5(a) to FIG. 5(c). A physical form of the outward foldable screen device includes at least a folded state and an unfolded state. For ease of understanding, the method in FIG. 7 is described by using an example in which a display region of a foldable display is divided into two regions. Therefore, reference numerals in FIG. 4 and FIG. 5(a) to FIG. 5(c) are used in the description. However, it may be understood that the reference numerals are merely used for ease of understanding, and do not impose any limitation on aspects such as a specific physical form of the electronic device and the foldable display. The method shown in FIG. 7 may also be applied to another display region division manner.

As shown in FIG. 7, the method 400 may include steps S410 to S430. The following describes each step in detail with reference to the accompanying drawings.

S410: Determine a physical form of an electronic device.

In this embodiment of this application, a physical form of the electronic device 100 is synchronized with a physical form of the foldable display 310. When the foldable display 310 is in the folded state, the electronic device 100 is also in the folded state. When the foldable display 310 is in the unfolded state, the electronic device is also in the unfolded state. In the following description, in the description about the physical form of the electronic device, the electronic device may be directly replaced with the foldable display; and in the description about the physical form of the foldable display, the foldable display may be directly replaced with the electronic device.

Herein, an example in which the electronic device 100 is an outward foldable screen device is used. The foldable display 310 of the electronic device 100 includes a region A and a region B. When the electronic device 100 is in the folded state, that is, in the forms shown in FIG. 5(a) and FIG. 5(b), the region A and the region B are away from each other and are both exposed to an external environment. When the electronic device 100 is in the unfolded state, that is, in the form shown in FIG. 5(c), the region A and the region B are located on a same plane.

In this embodiment of this application, the physical form of the electronic device is determined in various manners.

In an example, the region A and the region B may be folded together under an action of a folding hinge, or the region A and the region B may be unfolded to be on a same plane. In other words, the electronic device 100 may include a folding hinge, and the folding hinge is configured to fold or unfold the region A and the region B. Therefore, the physical form of the electronic device 100 may be determined by detecting an angle of the folding hinge.

Herein, the angle of the folding hinge is an included angle between the region A and the region B. For example, as shown in FIG. 8, the included angle between the region A and the region B is $\alpha$, where $0° \leq \alpha \leq 180°$. When the electronic device 100 is in different physical forms, the included angle $\alpha$ corresponds to different value ranges.

For example, when $0° \leq \alpha \leq a1$, it is considered that the electronic device 100 is in the folded state; or when $a1 < \alpha \leq 180°$, it is considered that the electronic device 100 is in the unfolded state, where a1 may be less than or equal to 90° and greater than or equal to 0°.

Alternatively, when $0° \leq \alpha \leq a1$, it is considered that the electronic device 100 is in the folded state; when $a1 < \alpha \leq a2$, it is considered that the electronic device 100 is in a semi-folded state; or when $a2 < \alpha \leq 180°$, it is considered that the electronic device 100 is in the unfolded state, where a1 < a2, a1 may be greater than or equal to 0° and less than or equal to 90°, and a2 may be greater than or equal to 90° and less than 180°.

It should be understood that the foregoing correspondence between the physical form of the electronic device and the included angle $\alpha$ is merely an example for description. In actual application, the physical form of the electronic device 100 may be divided into more forms, and correspondingly value ranges of the included angle $\alpha$ are different. This is not limited in embodiments of this application.

The included angle $\alpha$ between the region A and the region B may be obtained through measurement by using the angle sensor 180N in FIG. 1.

In another example, if the electronic device 100 includes a gyroscope and an acceleration sensor, the included angle between the region A and the region B may be calculated based on detection data of the gyroscope and the acceleration sensor, to determine the physical form of the electronic device 100.

For example, the gyroscope may monitor a change process of a tilt angle of the electronic device 100, and the acceleration sensor may obtain an acceleration change status. A motion or flipping process of the electronic device 100 and a spatial location relationship between different regions of the foldable display 310 may be determined based on the detection data of the gyroscope and the acceleration sensor. In this way, the physical form of the electronic device 100 can be determined.

In still another example, the physical form of the electronic device 100 may be determined based on a display parameter of a to-be-displayed image.

The to-be-displayed image herein is an image obtained after an upper layer (the application framework layer shown in FIG. 2) processes an original image based on a specific physical form of the electronic device. The display parameter of the to-be-displayed image matches a size of a region that is on the foldable display 310 and that is used to actually display a picture, and also matches the specific physical form of the electronic device.

In some embodiments, the display parameter of the to-be-displayed image includes resolution and/or an aspect ratio of the to-be-displayed image.

The resolution of the image refers to a quantity of pixels included in the image, and may be usually represented as a quantity of pixels in a horizontal direction and a vertical direction, for example, pixel height×pixel width. The pixel height refers to a quantity of pixels of the image in the vertical direction, and the pixel width refers to a quantity of pixels of the image in the horizontal direction. The aspect ratio of the image is a ratio of a width to a height of the image, and there is a correspondence between the aspect ratio and the resolution of the image. An example in which the display parameter includes the resolution of the to-be-displayed image is used below for description. In the following example, the resolution of the image may be replaced with the aspect ratio of the image.

For example, when the electronic device 100 is in the folded state and uses the region A for displaying, the resolution of the to-be-displayed image should be adapted to a size of the region A. When the electronic device 100 is in the folded state and uses the region B for displaying, the resolution of the to-be-displayed image should be adapted to a size of the region B. When the electronic device is in the unfolded state, the resolution of the to-be-displayed image should be adapted to a size of the display region 311 including both the region A and the region B. Generally, the size of the region A, the size of the region B, and the size of the entire display are preset or may be learned in real time. Therefore, a specific physical form of the electronic device 100 may be determined based on the resolution of the to-be-displayed image.

By way of example, and not limitation, for example, the electronic device 100 is a horizontally folded outward foldable screen device. A size of the foldable display 310 may be 1800×2200. After the foldable display 310 is folded along a folding axis aa, a size of a right side (namely, the region A) of the foldable display 310 is 1800× 1300 (in pixels), and a size of a left side (namely, the region B) of the foldable display 310 is 1800×900 (in pixels). If the resolution of the to-be-displayed image matches resolution of the region A, it may be determined that the electronic device 100 is in the folded state, where the region A is used to display an image, and the region B is not used to display an image. If the resolution of the to-be-displayed image matches resolution of the region B, it may be determined that the electronic device 100 is in the folded state, where the region B is used to display an image, and the region A is not used to display an image. If the resolution of the to-be-displayed image matches resolution of the display region 311, it may be determined that the electronic device 100 is in the unfolded state, where the entire region 311 (namely, a sum of the region A and the region B, or a sum of the region A, the region B, and the region C when the side screen is included) of the foldable display 310 is used to display an image.

In other words, when the display parameter of the to-be-displayed image matches a size of a partial region of the foldable display, it is determined that the electronic device is in the folded state. When the display parameter of the to-be-displayed image matches a size of an entire region of the foldable display, it is determined that the electronic device is in the unfolded state.

In still another example, the physical form of the electronic device 100 may be determined based on a display parameter of to-be-displayed content.

In this embodiment of this application, the to-be-displayed content may include a zero pixel region and a non-zero pixel region. The non-zero pixel region is used to display an image in a region that is on the foldable display and that is used to display an image, and the zero pixel region is used to display black in a region that is on the foldable display and that is not used to display an image. In this example, the physical form of the electronic device 100 may be specifically determined based on a size of the non-zero pixel region in the to-be-displayed content.

The to-be-displayed content herein is an image obtained after an upper layer (the application framework layer shown in FIG. 2) processes an original image based on a specific physical form of the electronic device. The size of the non-zero pixel region in the to-be-displayed content matches a size of a region that is on the foldable display 310 and that is used to actually display a picture, and also matches the specific physical form of the electronic device. In other words, all the to-be-displayed content has same resolution, but when the to-be-displayed content is displayed in regions of different sizes, a proportion of the zero pixel region in the to-be-displayed content and a proportion of the non-zero pixel region in the to-be-displayed content are different. Therefore, the physical form of the electronic device may be determined accordingly.

It should be noted that both the zero pixel region and the non-zero pixel region mentioned in the foregoing example are rectangular regions, and the zero pixel region and the non-zero pixel region have a same quantity of pixels in one of the horizontal direction and the vertical direction. For example, for an electronic device that is folded horizontally, the zero pixel region and the non-zero pixel region have a same quantity of pixels in a vertical direction. For an electronic device that is folded upward and downward, the zero pixel region and the non-zero pixel region have a same quantity of pixels in a horizontal direction.

It should be further noted that, this application mentions that the display region is used to display an image, and this means that the display region is used to display content that the user wants to see, or content that the user expects to present to the user, or content that easily attracts attention of the user. An objective of displaying black content in the zero pixel region on the display mentioned above is to make the user think that no image is displayed in the region. Therefore, black pixels are displayed in the display region, and it is not considered that the display region is used to display an image. In this embodiment of this application, even if a region that is considered by the user to be in a turned-off state can display black, it is still considered that the region is not used to display an image.

In this embodiment of this application, each pixel in the zero pixel region is a black pixel, and an RGB value is represented as (0, 0, 0). Therefore, a part that is in the to-be-displayed content and that corresponds to the zero pixel region is a black picture. If the black picture is displayed on the display, the user cannot see any image content, and thus considers that no image is displayed in the region.

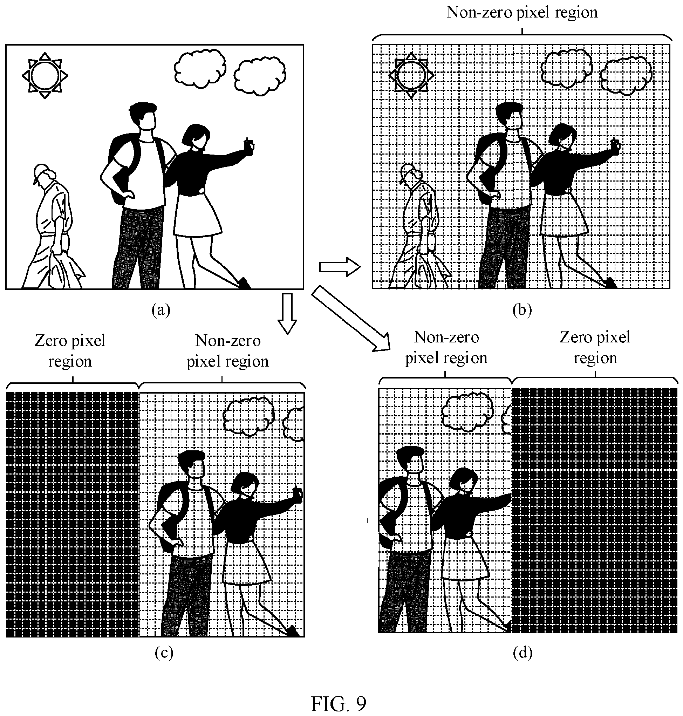

By way of example, and not limitation, refer to FIG. 9. An example of an original image is shown in (a) in FIG. 9. For example, resolution of the image may be 1800×2200.

If the user uses the region A and the region B to jointly display the image, to-be-displayed content may be shown in (b) in FIG. 9. A width of a non-zero pixel region in the to-be-displayed content is equal to a pixel width of the to-be-displayed content, that is, a size of a picture that needs to be displayed on the screen is 1800×2200. Therefore, when a size of the non-zero pixel region is the same as a size of the to-be-displayed content, it may be considered that the electronic device is in the unfolded state.

If the user uses the region A to display the image, to-be-displayed content may be shown in (c) in FIG. 9. A non-zero pixel region in the to-be-displayed content occupies a right part of the to-be-displayed content, and a zero pixel region in the to-be-displayed content occupies a left part of the to-be-displayed content. For example, a size of a picture corresponding to the non-zero pixel region is 1800× 1300, and a size of a picture corresponding to a zero pixel width region is 1800×900. Generally, a size of the region A or a size of the region B is preset, or may be learned in real time. Therefore, based on a result of matching the size of the non-zero pixel region with the region A, it may be determined that the electronic device is in the folded state and the region A is used to display the picture. When the to-be-displayed content shown in (c) in FIG. 9 is directly displayed on the foldable display 310, the user sees content only in the region A, and the region B is presented in black. In this case, the user considers that no image is displayed in the region B.

If the user uses the region B to display the image, to-be-displayed content may be shown in (d) in FIG. 9. A non-zero pixel region in the to-be-displayed content occupies a left part of the to-be-displayed content, and a zero pixel region in the to-be-displayed content occupies a right part of the to-be-displayed content. For example, a size of a picture corresponding to the non-zero pixel region is 1800×900, and a size of a picture corresponding to the zero pixel region is 1800× 1300. Therefore, based on a result of matching the size of the non-zero pixel region with the region B, it may be determined that the electronic device is in the folded state and the region B is used to display the picture. When the to-be-displayed content shown in (d) in FIG. 9 is directly displayed on the foldable display 310, the user sees content only in the region B, and the region A is presented in black. In this case, the user considers that no image is displayed in the region A.

In the foregoing example, the physical form of the electronic device 100 may be determined based on the result of matching the size of the non-zero pixel region with the region A or the region B.

In other words, when a proportion of the zero pixel region in the to-be-displayed content is greater than 0 and less than 1, it is determined that the electronic device is in the folded state. When a proportion of the zero pixel region in the to-be-displayed content is equal to 0, it is determined that the electronic device is in the unfolded state.

In this example, a concept of the non-zero pixel region in the to-be-displayed content is similar to that of the to-be-displayed image in the foregoing example.

In some embodiments, a location of the non-zero pixel region in the to-be-displayed content corresponds to a location, in the foldable display 310, of a region that is on the foldable screen and in which an image needs to be displayed. For example, if the non-zero pixel region is located on a right side of the to-be-displayed content, it indicates that the electronic device uses the region A to display the picture corresponding to the non-zero pixel region; and if the non-zero pixel region is located on a left side of the to-be-displayed content, it indicates that the electronic device uses the region B to display the picture corresponding to the non-zero pixel region. Therefore, the physical form of the electronic device may be further determined based on the location of the non-zero pixel region in the to-be-displayed content.

FIG. 9 is still used as an example for description. As shown in (c) in FIG. 9, the non-zero pixel region is located on the right side of the to-be-displayed content. In this case, it may be determined that the electronic device 100 needs to use the region A to display the picture corresponding to the non-zero pixel region, and use the region B to display a black picture. Therefore, it is determined that the electronic device 100 is in the folded state and the region A faces the user. As shown in (d) in FIG. 9, the non-zero pixel region is located on the left side of the to-be-displayed content. In this case, it may be determined that the electronic device 100 needs to use the region B to display the picture corresponding to the non-zero pixel region, and use the region A to display a black picture. Therefore, it is determined that the electronic device 100 is in the folded state and the region B faces the user.

In other words, the location of the non-zero pixel region in the to-be-displayed content may indicate a location, on the foldable display, of the region that is on the foldable display and that is used to display an image. A location of the zero pixel region in the to-be-displayed content may indicate a location, on the foldable display, of the region that is on the foldable display and that is not used to display an image. In this way, specific regions that are on the foldable display and that are used to display an image and specific regions that are on the foldable display and that are not used to display an image may also be determined based on the display parameter of the to-be-displayed content.

In some embodiments, a module or unit configured to perform step S410 may determine the physical form of the electronic device 100 in any manner described in the foregoing example.

In some other embodiments, the module or unit configured to perform step S410 may learn the physical form of the electronic device 100 by receiving information or an instruction that is sent by another module and that indicates the physical form of the electronic device 100. For example, the module or unit configured to perform step S410 may receive information that is sent by an upper layer like the display policy management service and that indicates the physical form of the foldable display 310, and does not need to determine the physical form of the electronic device 100 based on data detected by a sensor, the display parameter of the to-be-displayed image, or the like.

It should be noted that division and definition of the physical form of the electronic device 100 may be determined based on an actual requirement. For example, the physical form of the electronic device 100 may be divided based on the included angle between the region A and the region B or the spatial location relationship between the region A and the region B. The physical form of the electronic device 100 includes at least the folded state and the unfolded state, and certainly, may further include another form between the folded state and the unfolded state. This is not limited in embodiments of this application.

S420: Determine a display status of the foldable display.

In this embodiment of this application, determining the display status of the foldable display specifically means determining specific regions that are on the foldable display and that are used to display an image and specific regions that are on the foldable display and that are not used to display an image. For example, the foldable display includes the region A and the region B. In this step, actually, whether the region A is used to display an image and whether the region B is used to display an image need to be determined. For ease of description, the display status of the foldable display is classified into the following several situations:

(1) a display status of the foldable display when the electronic device is in the folded state and the display needs to display an image;

(2) a display status of the foldable display when the electronic device is in the folded state and the display does not need to display an image;

(3) a display status of the foldable display when the electronic device is in the unfolded state and the display needs to display an image; and

(4) a display status of the foldable display when the electronic device is in the unfolded state and the display does not need to display an image.

In some embodiments, whether the display needs to display an image may be determined by whether the foldable display 310 is in a power-on state. Optionally, an electrical signal of power supplied to the foldable display 310 by a power supply may be detected, for example, an input/output collector voltage (input/output collector voltage, IOVCC) signal, an internal analog voltage (internal analog voltage, VCI) signal, a drain voltage (drain voltage, VDD) signal, a reset (reset, RESET) signal, or the like, to determine whether the foldable display 310 is in the power-on state.

For example, when the foldable display 310 is in a power-off state, regardless of a physical form of the electronic device 100, it may be determined that neither the region A nor the region B is used to display an image. In other words, in the foregoing situations (1) and (4), neither the region A nor the region B is used to display an image.

When the foldable display 310 is in the power-on state, it may be determined that a partial region or an entire region of the foldable display 310 needs to be used to display an image. Specific regions used by the electronic device 100 for displaying need to be further determined based on the physical form of the electronic device 100. In the foregoing situation (3), the electronic device is in the unfolded state, and it may be determined that both the region A and the region B are used to display an image. In the foregoing situation (4), because different electronic devices predefine different display modes in the folded state, discussion needs to be performed based on different cases.

As mentioned in the foregoing embodiment, when the electronic device 100 is in the folded state and the display needs to display an image, there may be the following two cases. (1) The region A and the region B may display images independently, that is, the user may select the region A to display an image, or may select the region B to display an image, or select both the region A and the region B to display an image. (2) One of the region A and the region B is preset to be always used to display an image, and the other region is always not used to display an image, that is, after the user folds the electronic device 100, the electronic device 100 automatically displays the image by using the preset region instead of the other region.

For the case (1), the display status of the foldable display may be determined in the following several manners.

In an example, the display status of the foldable display may be determined based on the spatial location relationship between the region A and the region B.

For example, when the electronic device 100 is in the folded state, if the region A faces the user (or faces upward), and the region B is away from the user (or faces downward), it may be determined that the region A is used to display an image, and the region B is not used to display an image. On the contrary, if the region B faces the user (or faces upward), and the region A is away from the user (or faces downward), it may be determined that the region B is used to display an image, and the region A is not used to display an image.

Optionally, the spatial location relationship between the region A and the region B may be determined based on data detected by the gyroscope and the acceleration sensor.

In another example, the display status of the foldable display may be determined based on a display parameter of a to-be-displayed image.

The to-be-displayed image herein is an image obtained after an upper layer (the application framework layer shown in FIG. 2) processes an original image based on a specific physical form of the electronic device. The display parameter of the to-be-displayed image matches a size of a region that is on the foldable display 310 and that is used to actually display a picture. For detailed descriptions of the to-be-displayed image, refer to the descriptions of the to-be-displayed image in step S410. For brevity, details are not described herein again.

For example, if resolution of the to-be-displayed image is adapted to the size of the region A, it may be determined that the region A is used to display an image, and the region B is not used to display an image. On the contrary, if the resolution of the to-be-displayed image is adapted to the size of the region B, it may be determined that the region B is used to display an image and the region A is not used to display an image.

In still another example, the display status of the foldable display may be determined based on a display parameter of to-be-displayed content.

The to-be-displayed content may include a zero pixel region and a non-zero pixel region. The display status of the foldable display may be determined based on a size of the non-zero pixel region in the to-be-displayed content.

The to-be-displayed content herein is an image obtained after an upper layer (the application framework layer shown in FIG. 2) processes an original image based on a specific physical form of the electronic device. The size of the non-zero pixel region in the to-be-displayed content matches a size of a region that is on the foldable display 310 and that is used to actually display a picture. For detailed descriptions of the to-be-displayed content, refer to the descriptions of the to-be-displayed content in step S410. For brevity, details are not described herein again.

For example, if a size of the non-zero pixel region in the to-be-displayed content matches the size of the region A, it may be determined that the region A is used to display an image, and the region B is not used to display an image. On the contrary, if the size of the non-zero pixel region in the to-be-displayed content matches the size of the region B, it may be determined that the region B is used to display an image, and the region A is not used to display an image.

For the case (2), when the user needs to display an image on the folded foldable display 310, for example, the electronic device uses the region A to display the image by default, the display status of the foldable display may be determined in the following several manners.

In an example, it may be determined, based on a physical form change in which the electronic device 100 is switched from the unfolded state to the folded state, that the region A is used to display an image and the region B is not used to display an image. For example, when it is detected that the user folds the electronic device 100, a region for displaying a picture may be automatically switched from a full screen to the region A.

In another example, the electronic device 100 is in the folded state and the foldable display 310 is in a power-on state, so that it may be determined that the region A is used to display an image and the region B is not used to display an image.

In still another example, the display status of the foldable display may be determined based on a display parameter of a to-be-displayed image. For detailed descriptions of the to-be-displayed image, refer to the descriptions of the to-be-displayed image in step S410. For brevity, details are not described herein again.

The display parameter of the to-be-displayed image matches a size of a region that is on the foldable display 310 and that is used to actually display a picture. For example, if resolution of the to-be-displayed image is adapted to the size of the region A (that is, is not adapted to the size of the entire display region 311 of the foldable display 310), it may be determined that the region A is used to display an image, and the region B is not used to display an image.

It may be understood that, because the region B is always not used to display an image in the folded state, there are only two types for the resolution of the to-be-displayed image. One type is adapted to the size of the region A, and the other type is adapted to the size of the entire display region 311 of the foldable display 310.

In still another example, the display status of the foldable display may be determined based on a display parameter of to-be-displayed content. The to-be-displayed content may include a zero pixel region and a non-zero pixel region. The display status of the foldable display may be determined based on a size of the non-zero pixel region in the to-be-displayed content. For detailed descriptions of the to-be-displayed content, refer to the descriptions of the to-be-displayed content in step S410. For brevity, details are not described herein again.

The size of the non-zero pixel region in the to-be-displayed content matches a size of a region that is on the foldable display 310 and that is used to actually display a picture. For example, if the size of the non-zero pixel region in the to-be-displayed content matches the size of the region A (that is, does not match the size of the entire display region 311 of the foldable display 310), it may be determined that the region A is used to display an image, and the region B is not used to display an image.

It may be understood that, because the region B is always not used to display an image in the folded state, there are only two types of sizes of the non-zero pixel region of the to-be-displayed content. One type matches the size of the region A, and the other type matches the size of the entire display region 311 of the foldable display 310.

Step S420 is optional. In some embodiments, when the electronic device is in the folded state, the foldable display has only one display status. For example, the electronic device is configured to fixedly display an image by using the region A, and the region B is not used to display an image. In this case, the display status is determined accordingly after the physical form of the electronic device is determined. Therefore, step S420 may not need to be performed.

It should be noted that when step S420 needs to be performed, step S420 and step S410 may be performed simultaneously, or may be performed successively. This is not limited in embodiments of this application. In some embodiments, an execution process of step S410 and an execution process of step S420 may be independent of each other. In some other embodiments, a result of step S410 may be used as a condition for determining whether to continue to perform step S420. For example, step S420 continues to be performed only when a result that the electronic device 100 is in the folded state is obtained in step S410. Alternatively, a result of step S420 may be used as a condition for determining whether to continue to perform step S410. For example, step S410 continues to be performed only when a result that a partial region of the foldable display 310 is used to display an image and a partial region of the foldable display 310 is not used to display an image is obtained in step S420.

S430: Set the electronic device 100 to a first power saving mode when the electronic device 100 is in the folded state, a first region is used to display an image, and a second region is not used to display an image, where a light-emitting control signal and/or a gate scanning signal in the second region are/is in an off state.

Herein, the first region and the second region are two regions obtained by dividing the foldable display, where the first region is a region used to display an image, and the second region is a region not used to display an image. For example, when the region A is used to display an image, and the region B is not used to display an image, the first region is the region A, and the second region is the region B. When the region B is used to display an image, and the region A is not used to display an image, the first region is the region B, and the second region is the region A.

In this step, for example, if the region A is used to display an image, and the region B is not used to display an image, a light-emitting control signal (referred to as an EM signal for short in the following embodiments) and/or a gate scanning signal (referred to as a scanning signal for short in the following embodiments) of the region B are/is turned off. If the region B is used to display an image, and the region A is not used to display an image, an EM signal and/or a scanning signal in the region A are/is turned off.

In this embodiment of this application, the display region of the foldable display 310 includes a pixel array, and each pixel in the pixel array is used to display a color. Signals for controlling the display to display an image generally include a scanning signal, a source data signal (referred to as a data signal for short in the following embodiments), and an EM signal. The scanning signal and the data signal are used to control transmission of an image to the screen, and the EM signal is used to control whether a pixel of the display emits light. The display can display an image only when the scanning signal, the data signal, and the EM signal are all in an on state. A horizontally folded flexible display is used as an example. A control granularity of the data signal is a pixel row, and a control granularity of the scanning signal and a control granularity of the EM signal are both pixel columns. Herein, each pixel row includes a plurality of pixels, and each pixel column includes a plurality of pixels. In other words, each pixel row in the pixel array corresponds to one data signal, and each pixel column in the pixel array corresponds to one scanning signal and one EM signal. Therefore, in this step, that the electronic device 100 is set to the first power saving mode may be understood as the following: Scanning signals and/or EM signals corresponding to all pixel columns in the region (namely, the second region) that is not used to display an image are turned off.

In this embodiment of this application, when the electronic device 100 is in the folded state, the first region of the foldable display 310 is used to display an image, and the EM signal and/or the scanning signal in the second region (namely, the region that is not used to display an image) are/is turned off. In this way, pixels in the second region do not work. Compared with an existing solution in which pixels in a region not used to display an image are presented in black to achieve a screen-off effect, the method provided in this application can significantly reduce screen power consumption, improve battery life performance of the electronic device 100, and therefore, improve user experience.

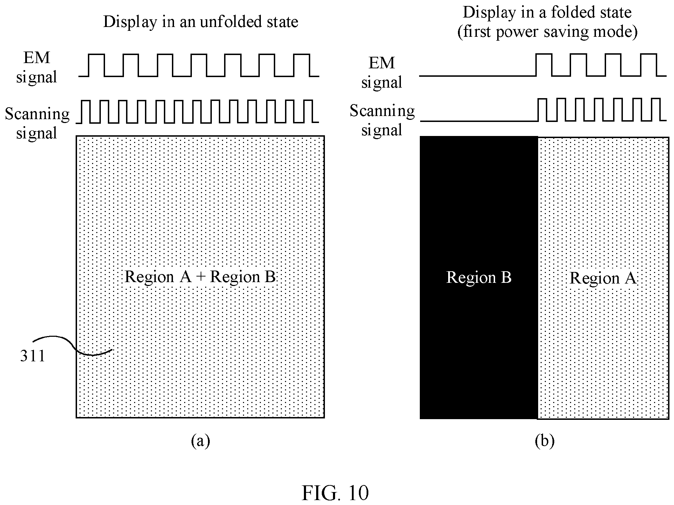

FIG. 10 is a diagram of working statuses of an EM signal and a scanning signal when an electronic device displays an image in an unfolded state and displays an image in a folded state. As shown in (a) in FIG. 10, when the electronic device 100 performs displaying in the unfolded state, both the EM signals and the scanning signals in the region A and the region B are in an on state. As shown in (b) in FIG. 10, when the electronic device 100 performs displaying in the folded state, for example, the region A is used for displaying and the region B is not used for displaying, both the EM signal and the scanning signal in the region A are in an on state, and both the EM signal and the scanning signal in the region B are in an off state.

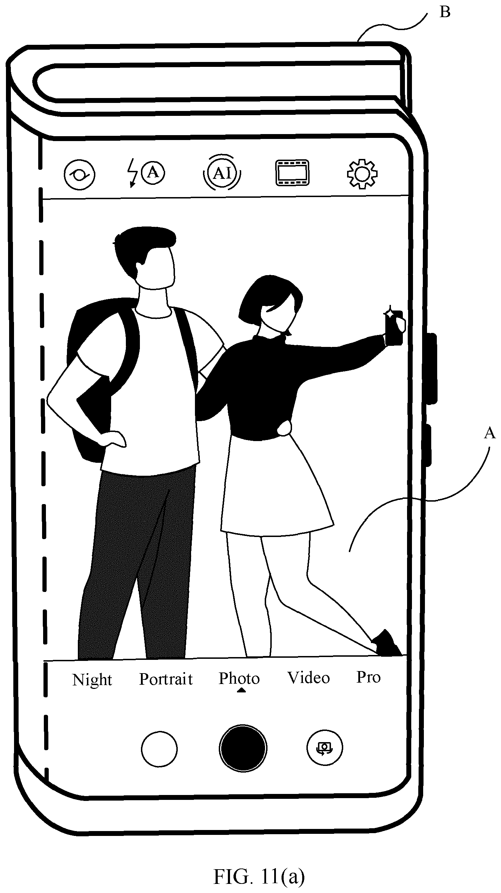

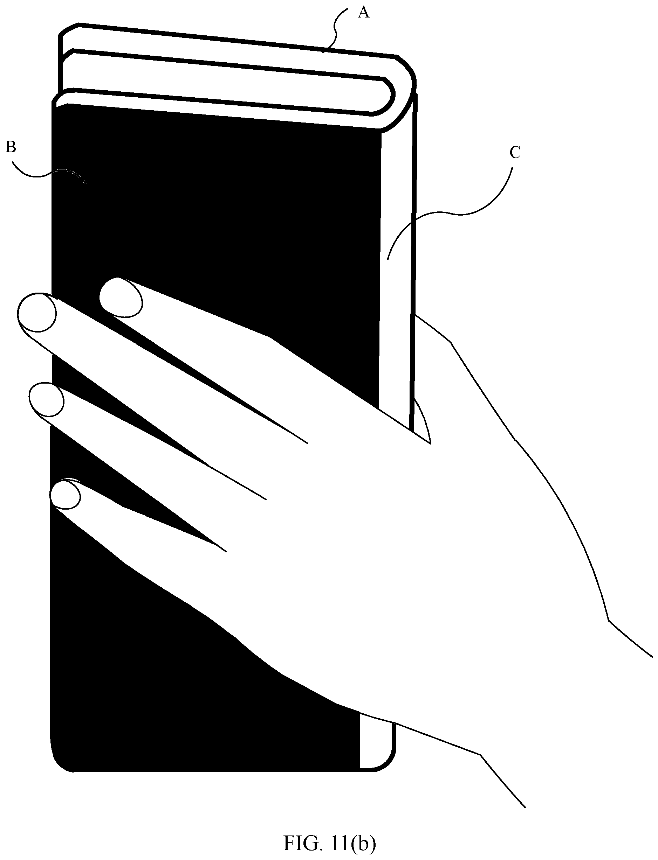

FIG. 11(a) and FIG. 11(b) are a diagram of a scenario in which a power consumption reduction method is applied to an electronic device according to this application. For example, as shown in FIG. 11(a), after folding the electronic device, the user may use the region A to display an image, and the region B is not used to display an image. The electronic device may turn off the EM signal and/or the scanning signal in the region B, so that pixels in the region B do not work. In this way, the region B is screened off, to reduce screen power consumption.

When a side screen (namely, a region C) is disposed between the region A and the region B, the side screen may independently display an image, as shown in FIG. 11(a) and FIG. 11(b). Alternatively, the side screen is used to collaborate with the region A to display an image. Alternatively, the side screen belongs to the region B, and a display status of the side screen is the same as that of the region B, that is, an EM signal and/or a scanning signal of the side screen are/is also turned off.

In some embodiments, the foregoing power consumption reduction method may also be applicable to reducing power consumption of the side screen. For example, when the side screen is not used for displaying, the EM signal and/or the scanning signal of the side screen are/is turned off. For a detailed process of reducing the power consumption of the side screen, refer to the foregoing related descriptions of reducing the power consumption of the region A or the region B. For brevity, details are not described herein again.

It may be understood that the power consumption reduction method provided in embodiments of this application may be performed at any stage in a running process (in which the electronic device 100 is in a power-on state) of the electronic device 100. In some embodiments, the running process of the electronic device 100 may be divided into a startup stage, a screen-on stage after the screen is turned off, a screen-on display stage, a screen-off stage, and the like. The startup stage and the screen-on stage after the screen is turned off may be considered as a process in which the display is switched from a power-off state to a power-on state. The screen-on display stage may be considered as a process in which the display is always in the power-on state. The screen-off stage may be considered as a process in which the display is always in the power-off state. The power consumption reduction method provided in embodiments of this application may be applied to the process in which the display is switched from the power-off state to the power-on state and the process in which the display is always in the power-on state, so that screen power consumption can be significantly reduced.

It can be learned from the foregoing descriptions of step S410 and step S420 that, in the example in which the to-be-displayed content includes the zero pixel region and the non-zero pixel region, the physical form of the electronic device 100 and the display status of the foldable display 310 may be synchronously determined based on related information (for example, the size of the non-zero pixel region and a location of the non-zero pixel region in the to-be-displayed content) of the non-zero pixel region in the to-be-displayed content. The following uses this implementation as an example to describe in more detail a procedure in which the electronic device 100 performs the method provided in this application.

For ease of understanding, the following first briefly describes a general procedure of displaying an image on a foldable display. The procedure is as follows.

(1) The application framework layer at the upper layer may obtain the physical form of the foldable display from the underlying display system, or determine the physical form of the foldable display based on data detected by a sensor;
(2) the application framework layer processes an original image based on the physical form of the foldable display, to obtain to-be-displayed content, where a display parameter of the to-be-displayed content matches the physical form of the foldable display;
(3) the application framework layer transfers the to-be-displayed content to a DSI module at a bottom layer; and
(4) the DSI module then transfers the to-be-displayed content to the foldable display for displaying.

That "a display parameter of the to-be-displayed content matches the physical form of the foldable display" mentioned above may be understood as the following: It may be learned, based on information about the to-be-displayed content, whether the to-be-displayed content is suitable for being displayed by the electronic device in the unfolded state or is suitable for being displayed by the electronic device in the folded state. In addition, when the to-be-displayed content is suitable for being displayed in the folded state, it may be further learned whether the to-be-displayed content is suitable for being displayed in a partial region of the foldable display (and a specific partial region in which the to-be-displayed content is suitable for being displayed) or is suitable for being displayed in the entire region of the foldable display.

In an embodiment, when the display is switched from the power-off state to the power-on state, for example, the electronic device 100 is just started up or the foldable display 310 is turned on, the electronic device 100 is enabled to enter a first power saving mode when it is determined that a first frame of to-be-displayed content transmitted by the upper layer to the DSI is suitable for being displayed by the electronic device 100 in the folded state by using a partial region of the foldable display 310, that is, an EM signal and/or a scanning signal in a region that is on the foldable display 310 and that is not used to display an image are/is turned off.

By way of example, and not limitation, for example, the foldable display 310 is divided into a primary screen and a secondary screen, and the secondary screen is not used to display an image in the folded state. When the foldable display 310 is switched from the power-off state to the power-on state, if the first frame of to-be-displayed content transmitted by the upper layer to the DSI is suitable for being displayed in the folded state, the electronic device enters the first power saving mode, that is, an EM signal and/or a scanning signal of the secondary screen are/is turned off. If the first frame of to-be-displayed content transmitted by the upper layer to the DSI is suitable for being displayed in the unfolded state, the procedure ends.

In this embodiment, the first frame of to-be-displayed content is detected, so that the electronic device can enter the first power saving mode as early as possible when a condition is met, thereby reducing screen power consumption as much as possible.

In another embodiment, when the display is always in the power-on state, and when it is determined that an $(N+1)^{th}$ frame of to-be-displayed content transmitted by the upper layer to the DSI is suitable for being displayed by the electronic device 100 in the folded state by using a partial region of the foldable display 310, if the electronic device 100 is already in the first power saving mode, the electronic device 100 keeps in the first power saving mode. If an $N^{th}$ frame of to-be-displayed content transmitted by the upper layer to the DSI is suitable for being displayed by the electronic device 100 in the unfolded state, the electronic device 100 enters the first power saving mode, that is, an EM signal and/or a scanning signal in a region that is on the foldable display 310 and that is not used to display an image are/is turned off.

By way of example, and not limitation, for example, the foldable display 310 is divided into a primary screen and a secondary screen, and the secondary screen is not used to display an image in the folded state. When the display is always in the power-on state, and when the $N^{th}$ frame of to-be-displayed content transmitted by the upper layer to the DSI is suitable for being displayed in the folded state, the electronic device enters the first power saving mode, that is, an EM signal and/or a scanning signal of the secondary screen are/is turned off. If the $(N+1)^{th}$ frame of to-be-displayed content transmitted by the upper layer to the DSI is still suitable for being displayed in the folded state, the electronic device keeps the EM signal and/or the scanning signal of the secondary screen turned off. Alternatively, when the $N^{th}$ frame of to-be-displayed content transmitted by the upper layer to the DSI is suitable for being displayed in the unfolded state, the electronic device 100 keeps the EM signal and/or the scanning signal of the secondary screen in an on state. If the $(N+1)^{th}$ frame of to-be-displayed content transmitted by the upper layer to the DSI is suitable for being displayed in the folded state, the electronic device turns off the EM signal and/or the scanning signal of the secondary screen.

In another embodiment, when the display is always in the power-on state, and when it is determined that the $(N+1)^{th}$ frame of to-be-displayed content transmitted by the upper layer to the DSI is suitable for being displayed by the electronic device 100 in the unfolded state, if the electronic device 100 is in the first power saving mode, the electronic device 100 turns on the EM signal and the scanning signal in the region previously not used to display an image.

By way of example, and not limitation, for example, the foldable display 310 is divided into a primary screen and a secondary screen, and the secondary screen is not used to display an image in the folded state. When the display is always in the power-on state, if the $(N+1)^{th}$ frame of to-be-displayed content transmitted by the upper layer to the DSI is suitable for being displayed in the unfolded state, and the electronic device 100 is in the first power saving mode, the EM signal and the scanning signal of the secondary screen are turned on before the $(N+1)^{th}$ frame of to-be-displayed content is displayed.

It should be noted that, in this embodiment of this application, a process of turning on the EM signal and the scanning signal does not affect turn-on and turn-off of another signal. Unless otherwise specified, a working process of another electrical signal like a data signal is the same as that in the conventional technology.

In the power consumption reduction method provided in embodiments of this application, when the electronic device 100 is in the folded state, a partial region of the foldable display 310 may be used for displaying, and the EM signal and/or the scanning signal in the region not used to display an image are/is turned off, thereby reducing screen power consumption. However, after the electronic device 100 is used for a long time, a problem that aging degrees of different regions of the foldable display 310 differ greatly may occur. Consequently, display brightness of different regions of the foldable display 310 varies, and user experience is affected. Therefore, an embodiment of this application further provides a power consumption reduction method, to reduce screen power consumption of an electronic device in a folded state, and further improve display brightness consistency of a foldable display.

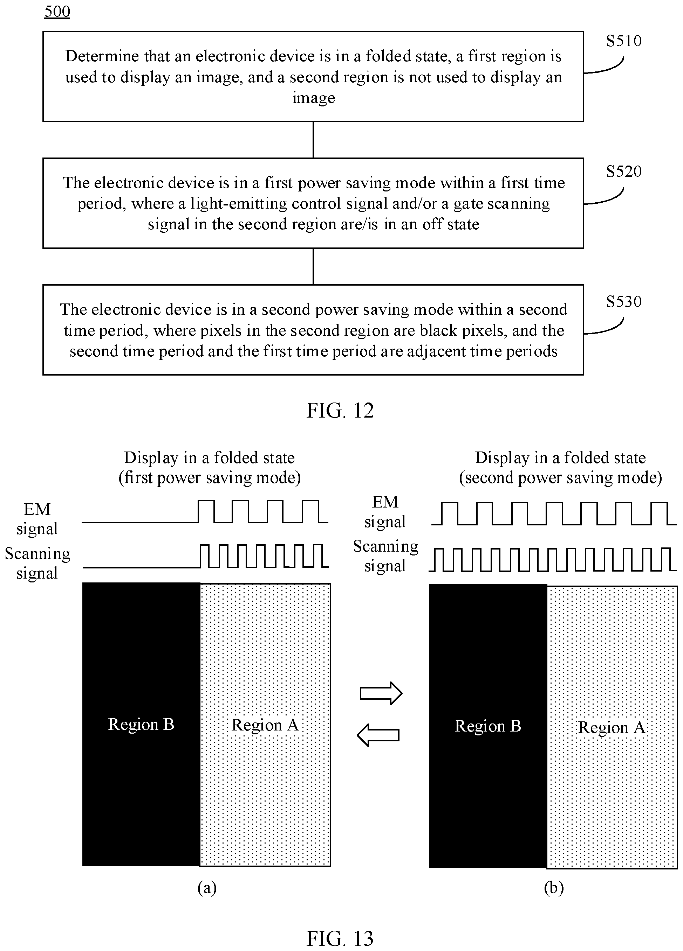

FIG. 12 is a schematic flowchart of a power consumption reduction method according to an embodiment of this application. A method 500 shown in FIG. 12 may be applied to a foldable screen device, for example, applied to the outward foldable screen device shown in FIG. 4 and FIG. 5(a) to FIG. 5(c). A physical form of the outward foldable screen device includes at least a folded state and an unfolded state. For ease of understanding, the method in FIG. 12 is described by using an example in which a display region of a foldable display is divided into two regions. Therefore, reference numerals in FIG. 4 and FIG. 5(a) to FIG. 5(c) are used in the description. However, it may be understood that the reference numerals are merely used for ease of understanding, and do not impose any limitation on aspects such as a specific physical form of the electronic device and the foldable display. The method shown in FIG. 12 may also be applied to another display region division manner.

As shown in FIG. 12, the method 500 may include steps S510 to S530. The following describes each step in detail with reference to the accompanying drawings.

S510: Determine that the electronic device 100 is in the folded state, a first region is used to display an image, and a second region is not used to display an image.

An explanation is the same as that of the first region and the second region in the method shown in FIG. 7. The first region and the second region are two regions obtained by dividing the foldable display, where the first region is a region used to display an image, and the second region is a region not used to display an image. For example, when the region A is used to display an image, and the region B is not used to display an image, the first region is the region A, and the second region is the region B. When the region B is used to display an image, and the region A is not used to display an image, the first region is the region B, and the second region is the region A.

In this step, a physical form of the electronic device 100 and a display status of the foldable display are determined. For a specific implementation, refer to the related descriptions of steps S410 and S420 in the method 400. For brevity, details are not described herein again.

S520: The electronic device is in a first power saving mode within a first time period, where a light-emitting control signal and/or a gate scanning signal in the second region are/is in an off state.

S520: The electronic device is in a second power saving mode within a second time period, where pixels in the second region are black pixels, and the second time period and the first time period are adjacent time periods.

In other words, when the electronic device 100 is in the folded state, a partial region of the foldable display 310 is used for displaying, and a partial region of the foldable display 310 is not used for displaying, the electronic device 100 may be enabled to alternately be in the first power saving mode and the second power saving mode. When the electronic device 100 is in the first power saving mode, the electronic device 100 turns off an EM signal and/or a scanning signal in a region that is on the foldable display and that is not used for displaying, to reduce screen power consumption. When the electronic device 100 is in the second power saving mode, the electronic device 100 turns on the EM signal and the scanning signal in the region that is on the foldable display and that is not used for displaying, so that pixels in the region are displayed in black. Compared with presenting a color picture in the region, displaying the pixels in black requires a much smaller signal voltage, so that screen power consumption can be reduced. In addition, display differences between different regions of the foldable display 310 can be reduced, and display brightness consistency of the foldable display 310 can be improved.

In this embodiment of this application, the first time period and the second time period are adjacent time periods, and the first time period may be before the second time period, or may be after the second time period. Therefore, step S520 may be performed before step S530, or may be performed after step S530. This is not limited in embodiments of this application.

In some embodiments, a sum of duration of the first time period and duration of the second time period is equal to a preset value. In this condition, the duration of the first time period and the duration of the second time period may be dynamically adjusted, so that screen power consumption can be reduced, and display brightness consistency between the first region and the second region can be improved.

In this embodiment of this application, when the condition in step S510 is met, that the electronic device is in the first power saving mode within the first time period and is in the second power saving mode within the second time period may be used as a periodicity. Within each time period corresponding to the preset value, each pixel in a region that is on the foldable display 310 and that is not used to display an image may alternately work.

Optionally, the preset value is greater than 0 and less than or equal to 10 seconds. For example, the preset value may be 5 seconds, 7 seconds, 9 seconds, or the like. In this way, before the electronic device is switched from the physical form determined in step S510 to another physical form, the electronic device may be enabled to be alternately in the first power saving mode and the second power saving mode as much as possible.

Optionally, the preset value may be timed by using a timer. Correspondingly, duration in which the electronic device is in the first power saving mode and duration in which the electronic device is in the second power saving mode may also be timed by using the timer.

In some embodiments, the duration of the first time period is equal to the duration of the second time period. In this way, the duration in which the electronic device is in the first power saving mode and the duration in which the electronic device is in the second electronic device are the same, a procedure is simple, and computing resources can be saved.

In some embodiments, a ratio of the duration in which the electronic device is in the first power saving mode to the duration in which the electronic device is in the second power saving mode may be dynamically adjusted by using an algorithm, to increase, as much as possible, a proportion of the duration in which the electronic device is in the first power saving mode, thereby reducing power consumption of the screen in the folded state and improving display brightness consistency of the screen.

Optionally, duration of the first power saving mode and duration of the second power saving mode may be calculated by using the following algorithm:

$$\begin{cases} \dfrac{T_m}{T_h} = \dfrac{(T_1 * L_1) * X + (T_2 * L_2) * Y}{(T_2 * L_2) * Y}, \\ T_m + T_h = T_{preset} \end{cases}$$

where

$T_m$ is the duration of the first power saving mode, and is in a unit of second (second);
$T_h$ is the duration of the second power saving mode, and is in a unit of second; and
$T_{preset}$ is the preset value, and is in a unit of second;
$T_1$ is a screen-on time period in which the electronic device performs displaying by using the entire region of the foldable display, and includes a screen-on time period in which the electronic device is in the unfolded state and a screen-on time period in which an image is displayed in the entire region of the display when the electronic device is in the folded state; and $T_1$ may be accumulated from a first power-on of the electronic device after delivery, or may be accumulated from a latest power-on of the electronic device, and is in a unit of second;
$L_1$ is average brightness when the electronic device performs displaying by using the entire region of the foldable display, and is in a unit of nit (nit);
$T_2$ is a screen-on time period in which the electronic device performs displaying by using a partial region of the foldable display, and includes a screen-on time period in which the electronic device is in the first power saving mode and a screen-on time period in which the electronic device is in the second power saving mode; and $T_2$ may be accumulated from a first power-on of the electronic device after delivery, or may be accumulated from a latest power-on of the electronic device, and is in a unit of second;
$L_2$ is average brightness when the electronic device performs displaying by using a partial region of the foldable display, and is in a unit of nit; and
X and Y are compensation coefficients, and may be obtained based on aging data of the foldable display.

For ease of understanding, for example, the foldable display is divided into a primary screen and a secondary screen, and the secondary screen is not used to display an image in the folded state. $T_1$ is a full-screen-on time period of the electronic device in the unfolded state. $T_2$ is a primary-screen-on time period of the electronic device in the folded state, and may specifically include a time period in which the primary screen is on and the electronic device is in the first power saving mode and a time period in which the primary screen is on and the electronic device is in the second power saving mode.

It may be learned from the foregoing algorithm that a longer time period for which the electronic device performs full-screen displaying and/or higher average brightness during full-screen displaying may indicate a larger $T_m$, that is, the electronic device is in the first power saving mode for a longer time when the electronic device is in the folded state. A longer time period for which the electronic device performs full-screen displaying and/or higher average brightness during full-screen displaying indicate/indicates a smaller aging difference between different regions of the foldable display. Therefore, when the electronic device is in the folded state, time for turning off an EM signal and/or a scanning signal may be properly prolonged.

A longer time period for which the electronic device performs half-screen displaying (that is, performs displaying by using a partial region of the display) and/or higher average brightness during half-screen displaying indicate/indicates a smaller $T_m$, that is, the electronic device is in the first power saving mode for a shorter time when the electronic device is in the folded state. A longer time period for which the electronic device performs half-screen displaying and/or higher average brightness during half-screen displaying indicate/indicates a larger aging difference between different regions of the foldable display. Therefore, when the electronic device is in the folded state, time for turning off an EM signal and a scanning signal may be properly reduced.

FIG. 13 is a diagram of working statuses of an EM signal and a scanning signal when an electronic device displays an image in a folded state. The electronic device 100 is in the folded state. In the following, an example in which the electronic device performs displaying by using a region A, and a region B is not used for displaying is used as an example for description. As shown in (a) in FIG. 13, when the electronic device 100 is in a first power saving mode, both an EM signal and a scanning signal in the region B are in an off state. As shown in (b) in FIG. 13, when the electronic device 100 is in a second power saving mode, both the EM signal and the scanning signal in the region B are in an on state. If a physical form of the electronic device and a display status of a foldable display remain unchanged, the electronic device is alternately in the first power saving mode and the second power saving mode.

With reference to FIG. 4 to FIG. 13, the foregoing describes the power consumption reduction method provided in embodiments of this application by using an example in which the electronic device 100 is a horizontally folded outward foldable screen device and the foldable display 310 is divided into two regions or three regions. In some other embodiments, another type of foldable screen device in a folded state may also display an image by using a partial region of a foldable display, and a partial region of the foldable display is not used to display an image. Therefore, the power consumption reduction method provided in this application may be further applied to the another type of foldable screen device, to reduce screen power consumption of the foldable screen device when the foldable screen device performs displaying in the folded state. The following provides brief description with reference to the accompanying drawings.

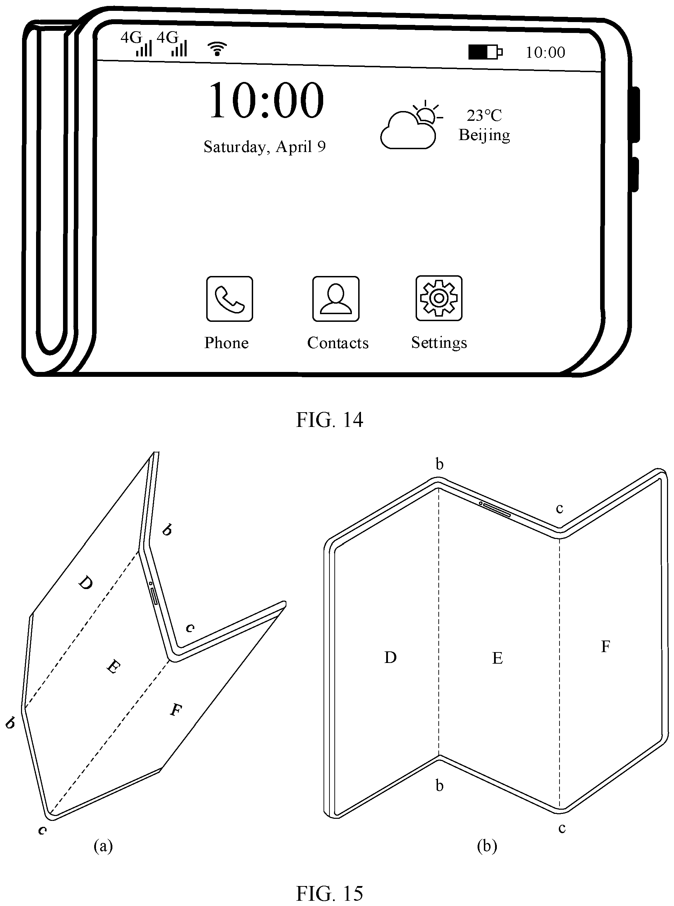

For example, refer to FIG. 14. In some embodiments, the foldable screen device in this embodiment of this application may alternatively be an outward foldable screen device that is folded upward and downward. The power consumption reduction method described above is also applicable thereto. For a specific process, refer to the foregoing related descriptions. For brevity, details are not described herein again.

For another example, refer to FIG. 15. In some embodiments, the foldable screen device in this embodiment of this application may have a plurality of folding axes, and a user may fold the foldable screen device for a plurality of times along the plurality of folding axes. For example, as shown in FIG. 15, a foldable display may include a folding axis bb and a folding axis cc that are in parallel. The two folding axes may divide the foldable display into three regions: a region D, a region E, and a region F respectively. The user may fold the display twice along the folding axis bb and the folding axis cc. Different from a double-foldable screen, a triple-foldable screen has more division types of physical forms and display statuses.

Optionally, as shown in (a) in FIG. 15, a folding manner of the foldable display may be as follows: The region D and/or the region F are/is folded backward. In this way, the folded state of the foldable display includes the following several forms.

(1) Both the region D and the region F are folded backward, and the region D, the region E, and the region F are stacked together, where one of the region D and the region F, and the region E are exposed to an external environment.
(2) The region D is folded backward, and the region F and the region E are on a same plane. In this way, the region D, the region E, and the region F are exposed to the external environment.
(3) The region F is folded backward, and the region D and the region E are on a same plane. In this way, the region D, the region E, and the region F are exposed to the external environment.

Therefore, when the electronic device is in the folded state, the electronic device may perform displaying by using any one or two of the region D, the region E, and the region F, and the power consumption reduction method provided in this application may be applied to a remaining region, thereby reducing screen power consumption.

Optionally, as shown in (b) in FIG. 15, another folding manner of the foldable display may be a mixture of inward folding and outward folding. For example, the region D, the region E, and the region F are folded in an N shape. In this way, the folded state of the foldable display includes the following several forms.

(1) The region D and the region F are folded relative to each other, and the region F and the region E are folded away from each other. In this way, the region F is exposed to the external environment, and the region D and the region E are relative to each other.
(2) The region F is folded backward, and the region D and the region E are on a same plane. In this way, the region D, the region E, and the region F are exposed to the external environment.
(3) The region D and the region F are folded relative to each other, and the region F and the region E are on a same plane. In this way, the region F is exposed to the external environment.

Therefore, when the electronic device is in the folded state, the electronic device may perform displaying by using any one or two of the region D, the region E, and the region F, and the power consumption reduction method provided in this application may be applied to a remaining region, thereby reducing screen power consumption.

In this embodiment of this application, when the power consumption reduction method described above is applicable to a triple-foldable screen or another foldable screen, a specific process thereof is similar to a specific process in which the method is applicable to the double-foldable screen. For details, refer to the foregoing related descriptions. For brevity, details are not described herein again.

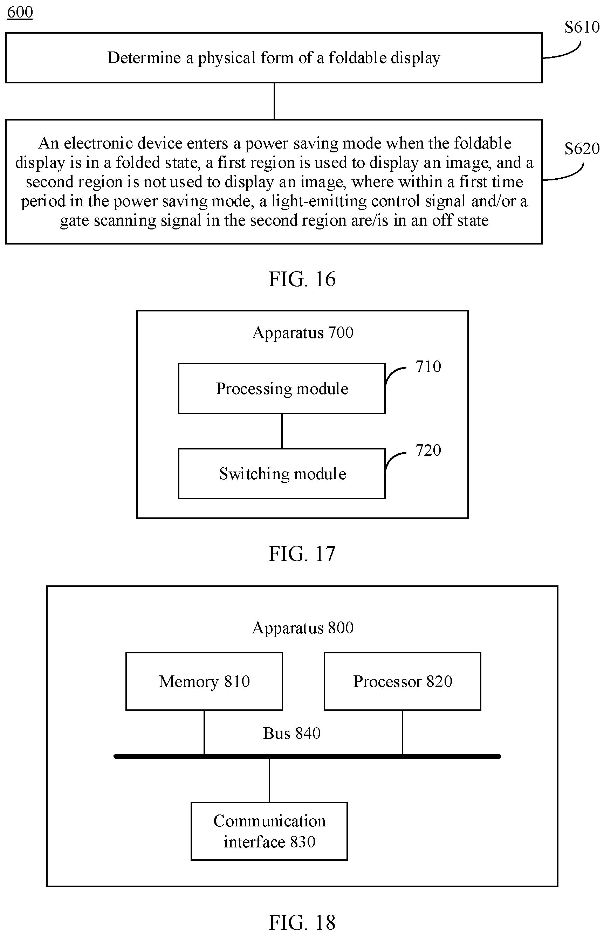

With reference to the foregoing embodiments and related accompanying drawings, an embodiment of this application provides a power consumption reduction method. The method may be implemented in the electronic device shown in FIG. 1 and FIG. 2. FIG. 16 is a schematic flowchart of a power consumption reduction method according to an embodiment of this application. A method 600 is applied to an electronic device provided with a foldable display. The foldable display includes a first region and a second region. The electronic device may be the electronic device 100 described above. As shown in FIG. 16, the method 600 may include step S610 and step S620.

S610: Determine a physical form of a foldable display.

In this embodiment of this application, the physical form of the foldable display includes a folded state and an unfolded state. In some embodiments, the physical form of the foldable display may further include another form, for example, a support form or a semi-folded state. When the foldable display is in the folded state, the electronic device may display an image by using a partial region or an entire region of the foldable display. When the foldable display is in the unfolded state, the electronic device may display an image by using the entire region of the foldable display.

In this step, the physical form of the foldable display may be determined in a plurality of manners.

In an example, the electronic device includes a folding hinge, and the folding hinge is configured to fold or unfold the foldable display. Therefore, step S610 may specifically include: detecting an angle of the folding hinge; and determining the physical form of the foldable display based on the angle of the folding hinge.

There are one or more folding hinges. When the electronic device includes one folding hinge, a user may fold the electronic device once. When the physical form of the foldable display is determined, an angle of the folding hinge is detected. When the electronic device includes a plurality of folding hinges, the user may fold the electronic device for a plurality of times. When the physical form of the foldable display is determined, angles of the plurality of folding hinges are detected.

There is a correspondence between the physical form of the electronic device and a value range for detecting the angle of the folding hinge. This may be specifically determined based on an actual situation, and is not specifically limited herein. The angle of the folding hinge may be obtained through measuring performed by an angle sensor.

In another example, the electronic device includes a gyroscope and an acceleration sensor. Therefore, step S610 may specifically include: determining the physical form of the foldable display based on detection data of the gyroscope and detection data of the acceleration sensor.

The gyroscope may monitor a change process of a tilt angle of the electronic device, and the acceleration sensor may obtain an acceleration change status. A motion or flipping process of the electronic device and a spatial location relationship between different regions of the foldable display may be determined based on the detection data of the gyroscope and the acceleration sensor. In this way, the physical form of the electronic device can be determined.

The electronic device has different physical forms obtained through division. Different physical forms correspond to different detection data of the gyroscope and different detection data of the acceleration sensor. A specific design may be based on an existing solution. This is not specifically limited herein.

In another example, the physical form of the foldable display may be determined based on a display parameter of a to-be-displayed image.

The display parameter of the to-be-displayed image matches a size of a region that is on the foldable display and that is used to display an image. For descriptions of the to-be-displayed image, refer to the to-be-displayed image in the descriptions of FIG. 7. For brevity, details are not described herein again.

Because regions used to display images are different, display parameters of to-be-displayed images are different. Therefore, a size of a region used to display the to-be-displayed image may be determined based on the display parameter of the to-be-displayed image, to determine the physical form of the foldable display. This embodiment of this application mainly focuses on the folded state of the foldable display. Therefore, the folded state of the foldable display and the unfolded state of the foldable display only need to be distinguished in this embodiment of this application.

In some embodiments, when the display parameter of the to-be-displayed image matches a size of a partial region of the foldable display, it is determined that the foldable display is in the folded state. When the display parameter of the to-be-displayed image matches a size of an entire region of the foldable display, it is determined that the foldable display is in the unfolded state.

Generally, when the foldable display is in the unfolded state, the electronic device displays an image in an entire display region of the foldable display, and does not display the image in a partial region of the foldable display.

In some embodiments, the display parameter of the to-be-displayed image includes resolution and/or an aspect ratio of the to-be-displayed image.

In some other embodiments, the physical form of the foldable display may be determined based on a display parameter of to-be-displayed content.

The to-be-displayed content includes a non-zero pixel region and a zero pixel region. The non-zero pixel region is used to display an image in a region that is on the foldable display and that is used to display an image, and the zero pixel region is used to display black in a region that is on the foldable display and that is not used to display an image. For descriptions of the to-be-displayed content, refer to the to-be-displayed content in the descriptions of FIG. 7. For brevity, details are not described herein again.

Content corresponding to the non-zero pixel region is content that needs to be presented to the user. Content corresponding to the zero pixel region is black, and is used to make the user consider that there is no image.

Herein, the display parameter of the to-be-displayed image matches a size of an entire region of the foldable display. A display parameter (for example, resolution and/or an aspect ratio) of the non-zero pixel region matches a size of a region that is on the foldable display and that is used to display an image. A display parameter (for example, resolution and/or an aspect ratio) of the zero pixel region matches a size of a region that is on the foldable display and that is not used to display an image.

Because regions used to display images are different, display parameters of non-zero pixel regions are different. Therefore, a size of a region used to display content corresponding to the non-zero pixel region may be determined based on the display parameter of the non-zero pixel region, to determine the physical form of the foldable display. This embodiment of this application mainly focuses on the folded state of the foldable display. Therefore, the folded state of the foldable display and the unfolded state of the foldable display only need to be distinguished in this embodiment of this application.

In some embodiments, when a proportion of the zero pixel region in the to-be-displayed content is greater than 0 and less than 1, it is determined that the foldable display is in the folded state. When a proportion of the zero pixel region in the to-be-displayed content is equal to 0, it is determined that the foldable display is in the unfolded state.

In other words, if the to-be-displayed content includes the content corresponding to the zero pixel region, it indicates that an image needs to be displayed in a partial region of the foldable display. If the to-be-displayed content does not include the content corresponding to the zero pixel region, it indicates that an image needs to be displayed in an entire region of the foldable display. Generally, when the foldable display is in the unfolded state, the electronic device displays an image in an entire display region of the foldable display, and does not display the image in a partial region of the foldable display. Therefore, the folded state of the foldable display and the unfolded state of the foldable display may be distinguished based on the proportion of the zero pixel region in the to-be-displayed content.

In some embodiments, a location of the non-zero pixel region in the to-be-displayed content indicates a location, on the foldable display, of the region that is on the foldable display and that is used to display an image; and a location of the zero pixel region in the to-be-displayed content indicates a location, on the foldable display, of the region that is on the foldable display and that is not used to display an image.

S620: The electronic device enters a power saving mode when the foldable display is in the folded state, the first region is used to display an image, and the second region is not used to display an image, where within a first time period in the power saving mode, a light-emitting control signal and/or a gate scanning signal in the second region are/is in an off state.

In this embodiment of this application, the first region and the second region are two regions in regions obtained by dividing the foldable display. The first region and the second region may be adjacent to each other, or may not be adjacent to each other.

For example, the electronic device is an outward double-foldable screen. The first region may be the region A in the foregoing embodiment, and the second region is the region B in the foregoing embodiment. Alternatively, the first region may be the region B in the foregoing embodiment, and the second region is the region A in the foregoing embodiment.

For example, the electronic device is an outward triple-foldable screen. Refer to (a) in FIG. 15. The first region may be the region E, and the second region is the region D or the region F. Alternatively, the first region is a sum of the region D and the region E, and the second region is the region F. Alternatively, the first region is a sum of the region F and the region E, and the second region is the region E.

For example, the electronic device is a triple-foldable screen mixed with inward folding and outward folding. Refer to (b) in FIG. 15. The first region may be the region F, and the second region may be a sum of the region D and the region E. Alternatively, the first region may be a sum of the region D and the region E, and the second region may be the region F.

In some embodiments, that the first region is used to display an image, and the second region is not used to display an image may be a fixed display mode by default when the foldable display is in the folded state. Therefore, when it is determined that the foldable display is in the folded state, it may be determined that the first region is used to display an image and the second region is not used to display an image.

In some other embodiments, if the foldable display has a plurality of display statuses when the foldable display is in the folded state, before step S620 is performed, the method 600 further includes: determining a display status of the foldable display.

In this embodiment of this application, the display status of the foldable display may be determined in a plurality of manners. For details, refer to the foregoing related descriptions of step S420 in FIG. 7. This is merely an example for description herein.

In an example, the display status of the foldable display is determined based on first information, where the first information includes the physical form of the foldable display and/or a spatial location relationship between the first region and the second region.

For example, if the spatial location relationship between the first region and the second region is that the first region faces upward and the second region faces downward, it may be determined that the first region is used to display an image and the second region is not used to display an image.

Because the electronic device has different physical forms obtained through division, different physical forms correspond to different display statuses. A specific design may be based on an existing solution. This is not specifically limited herein.

In another example, the display status of the foldable display may be determined based on the display parameter of the to-be-displayed image described in step S610. For example, when a size of the first region is different from a size of the second region and the display parameter of the to-be-displayed image matches the size of the first region, the display status of the foldable display is that the first region is used to display an image and the second region is not used to display an image.

In this way, both the physical form of the foldable display and the display status of the foldable display can be determined based on the display parameter of the to-be-displayed image, so that a calculation amount can be reduced, and a delay can be reduced.

In still another example, the display status of the foldable display may be determined based on the display parameter of the to-be-displayed content described in step S610. A relative location relationship between the non-zero pixel region and the zero pixel region corresponds to a relative location relationship between the first region and the second region. A region for displaying the content of the non-zero pixel region is used to display an image, and a region for displaying the content of the zero pixel region is not used to display an image. Therefore, when the location of the non-zero pixel region in the to-be-displayed content corresponds to a location of the first region on the foldable display, and the location of the zero pixel region in the to-be-displayed content corresponds to a location of the second region on the foldable display, it may be determined that the display status of the foldable display is that the first region is used to display an image and the second region is not used to display an image.

In this way, both the physical form of the foldable display and the display status of the foldable display can be determined based on the display parameter of the to-be-displayed content, so that a calculation amount can be reduced, and a delay can be reduced.

In this embodiment of this application, when the electronic device is in the power saving mode, within the first time period in the power saving mode, the light-emitting control signal and/or the gate scanning signal in the second region are/is in the off state. In this way, a pixel in the second region does not need to work, and a signal for controlling working of a pixel does not need to be applied to the pixel. Therefore, screen power consumption can be reduced, battery life performance of the electronic device can be improved, a service life of the electronic device can be prolonged, and user experience can be improved.

In some embodiments, duration of the first time period is duration within which the foldable display is in the folded state, the first region is used to display an image, and the second region is not used to display an image.

In other words, after the electronic device enters the power saving mode, provided that the physical form and the display status of the foldable display remain unchanged, the light-emitting control signal and/or the gate scanning signal in the second region may always remain in the off state. In this way, screen power consumption can be minimized.

In some embodiments, that the electronic device enters a power saving mode includes the following.

The electronic device enters a first power saving mode within the first time period, where in the first power saving mode, the light-emitting control signal and/or the gate scanning signal in the second region are/is in the off state; and

the electronic device enters a second power saving mode within a second time period, where in the second power saving mode, the light-emitting control signal and the gate scanning signal in the second region are in an on state, and the second region displays black, where
the first time period and the second time period are adjacent time periods.

In other words, after the electronic device enters the power saving mode, when the physical form and the display status of the foldable display remain unchanged, the light-emitting control signal and/or the gate scanning signal in the second region are/is in the off state within the first time period, and the light-emitting control signal and the gate scanning signal in the second region are in the on state within the second time period. In this way, a problem of display brightness consistency caused when the light-emitting control signal and/or the gate scanning signal in the second region are/is in the off state for a long time can be avoided. Specifically, after the electronic device enters the power saving mode, the light-emitting control signal and the gate scanning signal in the second region may be turned on at time intervals, so that the light-emitting control signal and/or the gate scanning signal in the second region are/is not in the off state for a long time. Therefore, a problem of inconsistent display brightness caused by inconsistent aging degrees of the first region and the second region can be avoided, so that display brightness consistency of the foldable display can be improved.

In some embodiments, after the electronic device enters the power saving mode, the electronic device alternately enters the first power saving mode and the second power saving mode.

In some embodiments, a sum of duration of the first time period and duration of the second time period is a preset value. In this condition, the duration of the first time period and the duration of the second time period may be dynamically adjusted, so that screen power consumption can be reduced, and display brightness consistency between the first region and the second region can be improved.

The preset value may be determined based on an actual requirement. For example, the preset value may be greater than 0 seconds and less than or equal to 10 seconds. In this way, before the physical form of the electronic device is switched to another physical form state, it can be ensured that the electronic device enters the first power saving mode at least once and enters the second power saving mode at least once in the state. In addition, the electronic device is alternately in the first power saving mode and the second power saving mode as much as possible.

In some embodiments, the duration of the first time period is in a positive correlation with duration and/or average brightness in which the foldable display is used for full-screen displaying; and/or the duration of the second time period is in a negative correlation with duration and/or average brightness in which the foldable display is used for full-screen displaying.

In this way, when the duration and/or average brightness in which the foldable display is used for full-screen displaying are/is long or high, the duration of the first time period may be set to be longer, and the duration of the second time period may be set to be shorter, so that screen power consumption is reduced as much as possible while display brightness consistency is improved.

In some embodiments, the duration of the first time period is in a negative correlation with duration and/or average brightness in which the foldable display is in the folded state, the first region is used to display an image, and the second region is not used to display an image; and/or the duration of the second time period is in a positive correlation with duration and/or average brightness in which the foldable display is in the folded state, the first region is used to display an image, and the second region is not used to display an image.

In this way, when the duration and/or average brightness in which the foldable display is in the folded state, the first region is used to display an image, and the second region is not used to display an image are/is long or high, the duration of the first time period may be set to be shorter, and the duration of the second time period may be set to be longer, so that display brightness consistency is improved while screen power consumption is reduced.

In some embodiments, the foregoing duration in which the foldable display is used for full-screen displaying and the duration in which the foldable display is in the folded state, the first region is used to display an image, and the second region is not used to display an image may be accumulated from a first power-on of the electronic device, or may be accumulated from a latest power-on of the electronic device. The latest power-on herein is a last power-on before the electronic device enters the power saving mode.

In some embodiments, the duration of the first time period is equal to the duration of the second time period. In other words, a time period within which the light-emitting control signal and/or the gate scanning signal in the second region are/is in the off state is equal to a time period within which the light-emitting control signal and/or the gate scanning signal in the second region are/is in the on state. In this way, screen power consumption can be reduced and display brightness consistency can be improved. Further, calculation complexity can be reduced, and computing resources can be saved.

In some embodiments, when the foldable display is in the folded state, the first region and the second region are away from each other. In this case, generally, a user can watch only one of the first region and the second region, and therefore, a light-emitting control signal and/or a gate scanning signal in a region that cannot be watched by the user may be turned off.

In some embodiments, the foldable display further includes a third region used to connect the first region to the second region, the third region is located at a bending position of the foldable display when the foldable display is in the folded state, and a part or all of the third region is used to assist the first region or the second region in displaying an image, or the third region is used to independently display an image.

The third region may be the foregoing side screen.

In some embodiments, when at least a partial region in the third region is not used to display an image, within the first time period in the power saving mode, a light-emitting control signal and/or a gate scanning signal in at least the partial region in the third region are/is in an off state. In other words, when at least the partial region in the third region is not used to display an image, pixels in at least the partial region may be enabled not to work, thereby further reducing screen power consumption.

In some embodiments, the foldable display is an organic light-emitting diode OLED screen.

The foregoing describes, with reference to FIG. 1 to FIG. 16, in detail the power consumption reduction method provided in embodiments of this application. The following describes in detail apparatus embodiments of this application with reference to FIG. 17 and FIG. 18. It should be understood that descriptions of the method embodiments correspond to descriptions of the apparatus embodiments. Therefore, for a part not described in detail, refer to the foregoing method embodiments.

FIG. 17 is a diagram of a structure of an apparatus according to an embodiment of this application. It should be understood that an apparatus 700 can perform the steps and the specific embodiments in the methods in FIG. 7, FIG. 12, and FIG. 16. For details, refer to a corresponding process in the foregoing method embodiments. To avoid repetition, details are not described herein again.

The apparatus 700 may be located in the electronic device 100 shown in FIG. 1. The apparatus 700 may be configured to perform the power consumption reduction method shown in FIG. 16, and may be further configured to perform the embodiments shown in FIG. 7 to FIG. 15. The apparatus 700 may include a processing module 710 and a switching module 720.

The processing module 710 may be configured to perform steps S410 and S420 in the method 400, or perform step S510 in the method 500, or perform step S610 in the method 600. The processing module 710 is configured to perform a step of determining a physical form and a display status of a foldable display.

The switching module 720 may be configured to perform step S430 in the method 400, or perform steps S520 and S530 in the method 500, or perform step S620 in the method 600. The switching module 720 is configured to perform a step of switching the electronic device to enter a power saving mode.

FIG. 18 is a diagram of a structure of an apparatus according to an embodiment of this application. An apparatus 800 shown in FIG. 18 may correspond to the apparatus 700 described above. Specifically, the apparatus 800 may be a specific example of the electronic device 100 in FIG. 1.

The apparatus 800 shown in FIG. 18 includes a memory 810, a processor 820, a communication interface 830, and a bus 840. The memory 810, the processor 820, and the communication interface 830 implement mutual communication connections through the bus 840.

The memory 810 may be a read-only memory (read only memory, ROM), a static storage device, a dynamic storage device, or a random access memory (random access memory, RAM). The memory 810 may store a program. When the program stored in the memory 810 is executed by the processor 820, the processor 820 is configured to perform the steps of the power consumption reduction method in embodiments of this application.

The processor 820 may use a general-purpose central processing unit (central processing unit, CPU), a microprocessor, an application-specific integrated circuit (application-specific integrated circuit, ASIC), a graphics processing unit (graphics processing unit, GPU), or one or more integrated circuits, and is configured to execute a related program, to implement the power consumption reduction method in embodiments of this application.

The processor 820 may alternatively be an integrated circuit chip and has a signal processing capability. In an implementation process, the steps of the power consumption reduction method in this application may be completed by using an integrated logic circuit of hardware in the processor 820, or by using instructions in a form of software. The foregoing processor 820 may alternatively be a general-purpose processor, a digital signal processor (digital signal processor, DSP), an application-specific integrated circuit, a field programmable gate array (field programmable gate array, FPGA) or another programmable logic device, a discrete gate or transistor logic device, or a discrete hardware component. The methods, the steps, and logical block diagrams that are disclosed in embodiments of this application may be implemented or performed. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, for example, a random access memory, a flash memory, a read-only memory, a programmable read-only memory, an electrically erasable programmable memory, or a register. The storage medium is located in the memory 810. The processor 820 reads information in the memory 810 and performs the power consumption reduction method in embodiments of this application in combination with hardware of the processor 820.

The communication interface 830 uses a transceiver apparatus, for example, but not limited to, a transceiver, to implement communication between the apparatus 800 and another device or a communication network.

The bus 840 may include a path for transmitting information between the components (for example, the memory 810, the processor 820, and the communication interface 830) of the apparatus 800.

An embodiment of this application further provides an electronic device, including one or more processors and one or more memories. The one or more memories store one or more computer programs, and the one or more computer programs include instructions. When the instructions are executed by the one or more processors, the electronic device is enabled to perform the steps in the methods shown in FIG. 7 to FIG. 16.

An embodiment of this application further provides a readable storage medium, including computer instructions. When the computer instructions are run on an electronic device, the electronic device is enabled to perform the steps in the methods shown in FIG. 7 to FIG. 16.

A person of ordinary skill in the art may be aware that units and algorithm steps in the examples described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus and method may be implemented in another manner. For example, the described apparatus embodiments are merely examples. For example, division into the units is merely logical function division and may be other division during actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part that contributes to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A power consumption reduction method, applied to an electronic device provided with a foldable display, wherein the foldable display comprises a first region and a second region, and the method comprises:

   determining a physical form of the foldable display, wherein the physical form comprises a folded state and an unfolded state; and
   entering, by the electronic device, a power saving mode when the foldable display is in the folded state, the first region is used to display an image, and the second region is not used to display an image, wherein within a first time period in the power saving mode, a light-emitting control signal and/or a gate scanning signal in the second region are/is in an off state.

2. The method according to claim 1, wherein duration of the first time period is duration within which the foldable display is in the folded state, the first region is used to display an image, and the second region is not used to display an image.

3. The method according to claim 1, wherein the entering, by the electronic device, a power saving mode comprises:

     entering, by the electronic device, a first power saving mode within the first time period, wherein in the first power saving mode, the light-emitting control signal and/or the gate scanning signal in the second region are/is in the off state; and
     entering, by the electronic device, a second power saving mode within a second time period, wherein in the second power saving mode, the light-emitting control signal and the gate scanning signal in the second region are in an on state, and the second region displays black, wherein
     the first time period and the second time period are adjacent time periods.

4. The method according to claim 3, wherein the entering, by the electronic device, a power saving mode comprises:
alternately entering, by the electronic device, the first power saving mode and the second power saving mode.

5. The method according to claim 3 or 4, wherein a sum of duration of the first time period and duration of the second time period is a preset value.

6. The method according to claim 5, wherein

     the duration of the first time period is in a positive correlation with duration and/or average brightness in which the foldable display is used for full-screen displaying; and/or
     the duration of the second time period is in a negative correlation with duration and/or average brightness in which the foldable display is used for full-screen displaying.

7. The method according to claim 5 or 6, wherein

     the duration of the first time period is in a negative correlation with duration and/or average brightness in which the foldable display is in the folded state, the first region is used to display an image, and the second region is not used to display an image; and/or
the duration of the second time period is in a positive correlation with duration and/or average brightness in which the foldable display is in the folded state, the first region is used to display an image, and the second region is not used to display an image.

8. The method according to claim 6 or 7, wherein the duration is accumulated from a first power-on of the electronic device, or is accumulated from a latest power-on of the electronic device.

9. The method according to any one of claims 5 to 8, wherein the preset value is greater than 0 seconds and less than or equal to 10 seconds.

10. The method according to any one of claims 3 to 9, wherein the duration of the first time period is equal to the duration of the second time period.

11. The method according to any one of claims 1 to 10, wherein the electronic device comprises a folding hinge, the folding hinge is configured to fold or unfold the foldable display, and the determining a physical form of the foldable display comprises:

     detecting an angle of the folding hinge; and
     determining the physical form of the foldable display based on the angle of the folding hinge.

12. The method according to any one of claims 1 to 11, wherein the electronic device comprises a gyroscope and an acceleration sensor, and the determining a physical form of the foldable display comprises:
determining the physical form of the foldable display based on detection data of the gyroscope and detection data of the acceleration sensor.

13. The method according to any one of claims 1 to 12, wherein the determining a physical form of the foldable display comprises:
determining the physical form of the foldable display based on a display parameter of a to-be-displayed image, wherein the display parameter of the to-be-displayed image matches a size of a region that is on the foldable display and that is used to display an image.

14. The method according to claim 13, wherein the determining the physical form of the foldable display based on a display parameter of a to-be-displayed image comprises:

when the display parameter of the to-be-displayed image matches a size of a partial region of the foldable display, determining that the foldable display is in the folded state; and

when the display parameter of the to-be-displayed image matches a size of an entire region of the foldable display, determining that the foldable display is in the unfolded state.

15. The method according to claim 13 or 14, wherein before the entering, by the electronic device, a power saving mode, the method further comprises:

determining a display status of the foldable display based on the display parameter of the to-be-displayed image, wherein

when a size of the first region is different from a size of the second region and the display parameter of the to-be-displayed image matches the size of the first region, the display status of the foldable display is that the first region is used to display an image and the second region is not used to display an image.

16. The method according to any one of claims 13 to 15, wherein the display parameter of the to-be-displayed image comprises resolution and/or an aspect ratio of the to-be-displayed image.

17. The method according to any one of claims 1 to 12, wherein the determining a physical form of the foldable display comprises:
determining the physical form of the foldable display based on a display parameter of to-be-displayed content, wherein the to-be-displayed content comprises a non-zero pixel region and a zero pixel region, the non-zero pixel region is used to display an image in a region that is on the foldable display and that is used to display an image, and the zero pixel region is used to display black in a region that is on the foldable display and that is not used to display an image.

18. The method according to claim 17, wherein the determining the physical form of the foldable display based on a display parameter of to-be-displayed content comprises:

when a proportion of the zero pixel region in the to-be-displayed content is greater than 0 and less than 1, determining that the foldable display is in the folded state; or
when a proportion of the zero pixel region in the to-be-displayed content is equal to 0, determining that the foldable display is in the unfolded state.

19. The method according to claim 17 or 18, wherein

a location of the non-zero pixel region in the to-be-displayed content indicates a location, on the foldable display, of the region that is on the foldable display and that is used to display an image; and

a location of the zero pixel region in the to-be-displayed content indicates a location, on the foldable display, of the region that is on the foldable display and that is not used to display an image.

20. The method according to claim 19, wherein before the entering, by the electronic device, a power saving mode, the method further comprises:

determining a display status of the foldable display based on the display parameter of the to-be-displayed content, wherein

when the location of the non-zero pixel region in the to-be-displayed content corresponds to a location of the first region on the foldable display, and the location of the zero pixel region in the to-be-displayed content corresponds to a location of the second region on the foldable display, the display status of the foldable display is that the first region is used to display an image and the second region is not used to display an image.

21. The method according to any one of claims 17 to 20, wherein a size of the non-zero pixel region matches a size of the region that is on the foldable display and that is used to display an image.

22. The method according to any one of claims 1 to 19, wherein before the entering, by the electronic device, a power saving mode, the method further comprises: determining the display status of the foldable display based on first information, wherein the first information comprises the physical form of the foldable display and/or a spatial location relationship between the first region and the second region.

23. The method according to any one of claims 1 to 22, wherein when the foldable display is in the folded state, the first region and the second region are away from each other.

24. The method according to any one of claims 1 to 22, wherein the foldable display further comprises a third region used to connect the first region to the second region, the third region is located at a bending position of the foldable display when the foldable display is in the folded state, and a part or all of the third region is used to assist the first region or the second region in displaying an image, or the third region is used to independently display an image.

25. The method according to claim 24, wherein when at

**EP 4 488 797 A1**

least a partial region in the third region is not used to display an image, within the first time period in the power saving mode, a light-emitting control signal and/or a gate scanning signal in at least the partial region in the third region are/is in an off state.

26. The method according to any one of claims 1 to 25, wherein the foldable display is an organic light-emitting diode OLED screen.

27. An electronic device, comprising:

    a foldable display, wherein the foldable display comprises a first region and a second region;
    one or more processors; and
    one or more memories, wherein
    the one or more memories store one or more computer programs, the one or more computer programs comprise instructions, and when the instructions are executed by the one or more processors, the electronic device is enabled to perform the method according to any one of claims 1 to 26.

28. A computer-readable storage medium, comprising computer instructions, wherein when the computer instructions are run on an electronic device, the electronic device is enabled to perform the method according to any one of claims 1 to 26.

Electronic device 100

Antenna 1

Antenna 2

| Mobile communication module 2G/3G/4G/5G [150] | Wireless communication module BT/WLAN/GNSS/NFC/IR/FM [160] |

Speaker [170A]

Receiver [170B]

Microphone [170C]

Headset jack [170D]

Audio module [170]

Displays 1 to N [194]

Cameras 1 to N [193]

Indicator [192]

Motor [191]

Button [190]

Internal memory [121]

SIM card interfaces 1 to N [195]

External memory interface [120]

Processor [110]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

Angle sensor [180N]

USB interface [130]

Charging input

Charging management module [140]

Power management module [141]

Battery [142]

FIG. 1

| Application layer | Camera | Calendar | Maps | WLAN | Music | Messages |
|---|---|---|---|---|---|---|
| | Gallery | Phone | Navigation | Bluetooth | Videos | ... |

| Application framework layer | Window manager | Content provider | Phone manager | Resource manager |
|---|---|---|---|---|
| | Display manager service | Display policy management service | | ... |

| System library | Status monitoring service | Surface manager | 2D graphics engine | Android runtime |
|---|---|---|---|---|
| | Sensor service | Media library | Three-dimensional graphics processing library | ... |

| Kernel layer | Display driver | MIPI driver | Bluetooth driver |
|---|---|---|---|
| | Audio driver | Sensor driver | ... |

| Hardware layer | Gyroscope | Acceleration sensor | Angle sensor | ... |
|---|---|---|---|---|

FIG. 2

FIG. 3

FIG. 4

FIG. 5(a)

FIG. 5(b)

FIG. 5(c)

FIG. 6

400

| Determine a physical form of an electronic device | S410 |

| Determine a display status of a foldable display | S420 |

| Set the electronic device to a first power saving mode when the electronic device is in a folded state, a first region is used to display an image, and a second region is not used to display an image, where a light-emitting control signal and/or a gate scanning signal in the second region are/is in an off state | S430 |

FIG. 7

FIG. 8

Non-zero pixel region

(a)

(b)

Zero pixel region · Non-zero pixel region

(c)

Non-zero pixel region · Zero pixel region

(d)

FIG. 9

Display in an unfolded state

EM
signal

Scanning
signal

311

Region A + Region B

(a)

Display in a folded state
(first power saving mode)

EM
signal

Scanning
signal

Region B

Region A

(b)

FIG. 10

FIG. 11(a)

FIG. 11(b)

500

Determine that an electronic device is in a folded state, a first region is used to display an image, and a second region is not used to display an image — S510

The electronic device is in a first power saving mode within a first time period, where a light-emitting control signal and/or a gate scanning signal in the second region are/is in an off state — S520

The electronic device is in a second power saving mode within a second time period, where pixels in the second region are black pixels, and the second time period and the first time period are adjacent time periods — S530

FIG. 12

Display in a folded state
(first power saving mode)

EM signal

Scanning signal

Region B    Region A

(a)

Display in a folded state
(second power saving mode)

EM signal

Scanning signal

Region B    Region A

(b)

FIG. 13

FIG. 14

(a)

(b)

FIG. 15

600

| Determine a physical form of a foldable display | S610 |

| An electronic device enters a power saving mode when the foldable display is in a folded state, a first region is used to display an image, and a second region is not used to display an image, where within a first time period in the power saving mode, a light-emitting control signal and/or a gate scanning signal in the second region are/is in an off state | S620 |

FIG. 16

Apparatus 700

Processing module — 710

Switching module — 720

FIG. 17

Apparatus 800

Memory 810     Processor 820

Bus 840

Communication interface 830

FIG. 18

## INTERNATIONAL SEARCH REPORT

| | International application No. |
|---|---|
| | **PCT/CN2023/090007** |

**A.    CLASSIFICATION OF SUBJECT MATTER**

G06F1/3234(2019.01)i

According to International Patent Classification (IPC) or to both national classification and IPC

**B.    FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS, CNTXT, VEN, EPTXT, WOTXT, CNKI, IEEE: 柔性屏, 折叠屏, 折叠, 展开, 省电, 节能, 降低功耗, 发光控制信号, 关闭, 黑屏, flexible screen, folding screen, flod, unfold, reduce power consumption, EM, close, black screen

**C.    DOCUMENTS CONSIDERED TO BE RELEVANT**

| Category* | Citation of document, with indication, where appropriate, of the relevant passages | Relevant to claim No. |
|---|---|---|
| X | CN 111258518 A (BEIJING XIAOMI MOBILE SOFTWARE CO., LTD.) 09 June 2020 (2020-06-09)<br>    description, paragraphs [0082]-[0095] and [0129]-[0132] | 1-28 |
| X | CN 112086022 A (LG DISPLAY CO., LTD.) 15 December 2020 (2020-12-15)<br>    description, paragraphs [0062]-[0134] | 1-28 |
| X | CN 111198605 A (SHENZHEN TRANSSION HOLDINGS CO., LTD.) 26 May 2020 (2020-05-26)<br>    description, paragraphs [0029]-[0034] | 1-28 |
| A | CN 103544920 A (HISENSE GROUP CO., LTD.) 29 January 2014 (2014-01-29)<br>    entire document | 1-28 |
| A | CN 113362778 A (SAMSUNG DISPLAY CO., LTD.) 07 September 2021 (2021-09-07)<br>    entire document | 1-28 |
| A | US 2022036827 A1 (SHANGHAI YUNYINGGU TECHNOLOGY CO., LTD.) 03 February 2022 (2022-02-03)<br>    entire document | 1-28 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 June 2023** | **23 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT<br>Information on patent family members | | | | International application No.<br>**PCT/CN2023/090007** | | | |
|---|---|---|---|---|---|---|---|

| Patent document<br>cited in search report | | | Publication date<br>(day/month/year) | Patent family member(s) | | | Publication date<br>(day/month/year) |
|---|---|---|---|---|---|---|---|
| CN | 111258518 | A | 09 June 2020 | None | | | |
| CN | 112086022 | A | 15 December 2020 | EP | 3751546 | A2 | 16 December 2020 |
| | | | | US | 2020394984 | A1 | 17 December 2020 |
| | | | | US | 11100900 | B2 | 24 August 2021 |
| | | | | TW | 202046282 | A | 16 December 2020 |
| | | | | KR | 20200142394 | A | 22 December 2020 |
| CN | 111198605 | A | 26 May 2020 | None | | | |
| CN | 103544920 | A | 29 January 2014 | None | | | |
| CN | 113362778 | A | 07 September 2021 | KR | 20210112442 | A | 15 September 2021 |
| | | | | US | 2021280121 | A1 | 09 September 2021 |
| | | | | US | 11250762 | B2 | 15 February 2022 |
| US | 2022036827 | A1 | 03 February 2022 | WO | 2022028435 | A1 | 10 February 2022 |
| | | | | US | 11443696 | B2 | 13 September 2022 |

Form PCT/ISA/210 (patent family annex) (July 2022)

**REFERENCES CITED IN THE DESCRIPTION**

**Patent documents cited in the description**

- CN 202210454392